# FASCICULE DE BREVET EUROPEEN

(11) **EP 2 099 942 B1**
(45) Date de publication et mention de la délivrance du brevet: **13.03.2013**
(21) Numéro de dépôt: 07858459.6
(22) Date de dépôt: 16.10.2007
(51) Int. Cl.: C22C 16/00, G21C 3/00, C22F 1/18, C22C 1/02, C22C 1/04, B32B 15/01

(54) **GAINE DE COMBUSTIBLE NUCLEAIRE EN ALLIAGE DE ZIRCONIUM COMPRENANT DE L'ERBIUM ET SES PROCEDES DE PREPARATION ET DE MISE EN FORME**
KERNBRENNSTOFFHÜLLLE AUS EINER ERBIUMHALTIGEN ZIRKONIUMLEGIERUNG UND VERFAHREN ZU DEREN HERSTELLUNG UND FORMUNG
NUCLEAR FUEL CLADDING FROM AN ERBIUM-CONTAINING ZIRCONIUM ALLOY AND METHOD FOR PREPARING AND SHAPING THE SAME

(30) Priorité: 16.10.2006 FR 0609047
(43) Date de publication de la demande: 16.09.2009
(73) Titulaire: Commissariat à l'Énergie Atomique et aux Énergies Alternatives, 75015 Paris (FR)
(72) Inventeur: BRACHET, Jean-Christophe, 91140 Villebon-sur-Yvette (FR); KORALEWSKI - CHABERT, Christine, 13770 Venelles (FR); OLIER, Patrick, 92320 Chatillon (FR); URVOY, Stéphane, 92140 Clamart (FR)
(74) Mandataire: Jelsch, Emmanuel Edwin
(86) Numéro de dépôt international: PCT/FR2007/001698
(87) Numéro de publication internationale: WO 2008/046999

(56) Documents cités:
- FR-A1- 2 789 404
- US-A- 5 267 290
- DATABASE CA [Online] CHEMICAL ABSTRACTS SERVICE, COLUMBUS, OHIO, US; 13 avril 2006 (2006-04-13), LUO, JUN ET AL: "Effects of yttrium and erbium additions on glass-forming ability and mechanical properties of bulk glassy Zr-Al-Ni-Cu alloys" XP002432537 extrait de STN Database accession no. 2006:341450 & MATERIALS TRANSACTIONS , 47(2), 450-453 CODEN: MTARCE; ISSN: 1345-9678, 2006,
- IQBAL, M. ET AL: "Synthesis and characterization of bulk amorphous Zr65Cu18Ni9Al8 and [Zr0.65Cu0.18Ni0.09Al0.08]98Er2 alloys" JOURNAL OF NON-CRYSTALLINE SOLIDS , 352(30-31), 3290-3294 CODEN: JNCSBJ; ISSN: 0022-3093, 10 juillet 2006 (2006-07-10), XP002432532
- DATABASE CA [Online] CHEMICAL ABSTRACTS SERVICE, COLUMBUS, OHIO, US; 12 mai 1984 (1984-05-12), BYKOV, V. N. ET AL: "Effect of erbium on the oxidation resistance of zirconium" XP002432538 extrait de STN Database accession no. 1981:501621 & ZASHCHITA METALLOV , 17(2), 219-21 CODEN: ZAMEA9; ISSN: 0044-1856, 1981,

## Description

### DOMAINE TECHNIQUE

La présente invention se situe de façon générale dans le domaine nucléaire, en particulier celui du combustible nucléaire, et concerne un alliage de zirconium comprenant de l'erbium, une pièce de structure comprenant cet alliage et des procédés de fabrication et de mise en forme de cet alliage.

Un tel alliage est en particulier destiné à la fabrication d'un élément constitutif d'un assemblage (telle une gaine) de combustible de réacteur nucléaire utilisant l'eau comme réfrigérant, notamment un Réacteur à Eau Pressurisée (REP), un Réacteur à Eau Bouillante (REB), ou un réacteur pour la propulsion nucléaire, et de manière plus générale pour tout coeur de réacteur ou chaudière nucléaire compact ou non nécessitant une anti-réactivité neutronique modulable et/ou évolutive au cours du temps. Cet alliage peut aussi être utilisé dans tout type de réacteur fonctionnant à des taux de combustion élevés.

### ETAT DE LA TECHNIQUE

Les producteurs d'électricité d'origine nucléaire poursuivent l'objectif permanent d'augmenter la disponibilité de leur parc de centrales et de diminuer le coût de l'électricité produite. Par exemple, dans un REP ou un REB, un des moyens mis en oeuvre pour atteindre cet objectif consiste à augmenter la longueur des cycles et corrélativement le taux de combustion. Ainsi, on vise actuellement des épuisements de décharge supérieurs à 70 GWj/t (milliard de watts jour par tonne). Cette idée impose nécessairement d'augmenter la sur-réactivité initiale (enrichissement en ²³⁵U) et donc d'augmenter les moyens de contrôle pour compenser cet accroissement de réactivité en début du cycle de combustion.

Par ailleurs, un même besoin accru d'anti-réactivité neutronique est nécessaire si l'on veut une consommation accrue de combustible contenant du plutonium (tel que le MOX (Mixed Oxide, combustible à base d'oxydes mixtes d'uranium et de plutonium)) dans l'optique du recyclage et d'une consommation des stocks de plutonium.

Enfin, un besoin analogue se rencontre dans le cadre des applications de l'énergie nucléaire nécessitant une réserve de puissance importante (propulsion nucléaire par exemple) et de manière générale pour des coeurs de chaudière nucléaire compacts qui nécessitent de fait un contrôle pointu et évolutif de l'anti-réactivité neutronique.

Dans cet objectif de compenser l'accroissement de réactivité du combustible au début du cycle de combustion d'un réacteur nucléaire et tant que nécessaire tout au long de l'épuisement du combustible, les concepteurs des réacteurs REP ont choisi comme solution de référence d'utiliser le bore sous forme de l'acide borique H₃BO₃ dissous à des concentrations variables dans l'eau du circuit primaire. La répartition homogène dans le coeur de l'acide borique fait que ce poison neutronique ne perturbe pas la distribution de puissance radiale. Toutefois, au vu entre autres de problèmes de sûreté, de dégradation du coefficient de température modérateur négatif du coeur et de corrosion tels qu'ils sont décrits dans la demande de brevet FR 2789404 [1], on cherche à limiter la concentration initiale en bore soluble.

Pour cela, il est parfois nécessaire d'utiliser un autre poison neutronique en plus du bore. En général, c'est un poison neutronique solide (il ne se dilate pas lors d'une augmentation de température). Comme la sur-réactivité à compenser s'amenuise et disparaît avec la consommation du combustible, il faut qu'en parallèle ce poison neutronique disparaisse et que sa pénalité résiduelle soit la plus faible possible. On utilise donc des poisons neutroniques consommables qui disparaissent par capture neutronique au cours du(des) cycle(s) d'irradiation.

A ce jour, le poison neutronique consommable de référence pour les REP est le gadolinium. Il est utilisé sous forme d'oxyde mélangé en proportion adéquate avec l'oxyde d'uranium dans un certain nombre de crayons de l'assemblage combustible (empoisonnement dit « hétérogène »).

Ce mode d'utilisation présente cependant lui aussi des inconvénients. Ainsi l'introduction du gadolinium directement dans le combustible, outre qu'il pollue les chaînes de fabrication du combustible, contribue à détériorer sa conductivité thermique entraînant le développement de points chauds. En outre, la compatibilité du gadolinium avec un autre combustible tel que le MOX est incertaine et complexe à mettre en oeuvre. Enfin, l'empoisonnement est réalisé par l'introduction de gadolinium dans certains crayons de l'assemblage : il est à ce titre hétérogène et perturbe également la distribution de puissance radiale de l'assemblage.

Même si ce mode d'empoisonnement présente certains avantages pour atteindre un taux de combustion voisin de 60 à 70 GWj/t pour les gestions actuelles des REP et les futures gestions de référence pour les réacteurs de type European Pressurized Reactor (EPR), il reste que dans l'objectif de pallier les problèmes précités et d'allonger encore plus les longueurs de cycle et donc les taux de combustion de déchargement à des taux par exemple de 100-120 GWj/t, un autre poison neutronique consommable apparaît plus approprié : l'erbium.

Des six isotopes stables présents dans l'erbium naturel, les trois isotopes ¹⁶⁶Er, ¹⁶¹Er et ¹⁶⁸Er sont prépondérants. L'¹⁶⁷Er est l'isotope absorbant de la chaîne dont l'¹⁶⁶Er est le précurseur, l'¹⁶⁸Er étant considéré comme le noyau terminal. Cet isotope de l'erbium n'est pas radioactif et présente donc l'avantage de ne pas générer de quantité supplémentaire de déchets radioactifs.

Du fait de sa section efficace d'absorption plus faible que celle du gadolinium, la cinétique d'usure de l'erbium est plus lente : ce poison neutronique consommable s'adapte donc mieux à des cycles plus longs. Son intégrale de résonance plus forte traduit une absorption beaucoup plus constante au cours du cycle car moins tributaire d'une grande section efficace thermique comme celle du ¹⁵⁷Gd. L'isotope neutroniquement prépondérant ¹⁶⁷Er présente deux résonances thermiques à E₀ = 0.46eV et E₀ = 0.58eV. Ces résonances recouvrent l'aile de la grande résonance à 0.3 eV du ²³⁹Pu. Du fait de cet effet de protection mutuelle, l'erbium est également un excellent poison neutronique consommable pour les Réacteurs à Eau Légère de type REL MOX.

De par les caractéristiques neutroniques de l'erbium, le mode d'empoisonnement le plus performant est le mode homogène, à savoir une répartition du poison neutronique consommable dans tous les crayons de combustible groupés dans l'assemblage. La distribution de puissance radiale de l'assemblage n'est ainsi pas perturbée.

Partant de ce constat et des inconvénients liés à l'introduction du poison neutronique consommable directement dans la pastille combustible, le concept le plus approprié consiste à associer l'erbium à la gaine du crayon renfermant les pastilles de combustible (appelée par la suite « gaine de combustible nucléaire »). Cette gaine qui est le plus souvent constituée d'un alliage de zirconium peut être sous forme de tube ou de plaque suivant les applications envisagées.

En associant l'erbium à cette gaine et non au combustible, on libère un volume qui peut être récupéré par une quantité plus importante de pastille de combustible, ce qui va dans le sens d'un meilleur rendement énergétique de l'assemblage des crayons.

L'erbium peut être utilisé dans les proportions qui se trouvent à l'état naturel, mais on peut également prévoir d'introduire de l'erbium enrichi en isotope absorbant à savoir ¹⁶⁷Er ou bien une combinaison.d'erbium isotopiquement enrichi et d'erbium naturel. On peut également envisager de l'associer avec un autre poison neutronique.

Plusieurs solutions permettant d'associer de l'erbium à une gaine de combustible nucléaire ont été proposées à ce jour. Elles peuvent être classées suivant le nombre de couches composant cette gaine, au moins une de ces couches incorporant de l'erbium.

La première famille de solutions, qui est a priori la plus simple à mettre en oeuvre, consiste à incorporer de l'erbium à la teneur adéquate dans une gaine de combustible nucléaire constituée d'une unique couche d'alliage de zirconium.

Cette famille de solutions est illustrée par le brevet US 5,267,284 [2] qui propose d'incorporer à un alliage de zirconium (tel que le Zircaloy^{®}-2 ou Zircaloy^{®}-4) 0,1 % à 0,4 % en poids de l'isotope ¹⁶⁷Er, qui est la forme isotopique la plus efficace de l'erbium vis-à-vis de l'anti-réactivité neutronique recherchée. La solution ici proposée présente l'inconvénient que l'incorporation d'erbium sous forme exclusive de l'isotope ¹⁶⁷Er, bien que favorisant l'emploi d'une quantité plus faible d'erbium pour une même efficacité neutronique, conduit à un surcoût de fabrication du aux technologies de séparation isotopique à mettre en oeuvre pour extraire l'isotope ¹⁶⁷Er de l'erbium naturel, surcoût qui peut s'avérer rédhibitoire.

La demande de brevet FR 2789404 [1] propose quant à elle d'incorporer dans une gaine de combustible nucléaire de l'erbium naturel en tant que poison neutronique consommable entre 0,1 % et 3,0 % en poids dans un alliage de zirconium contenant plus de 0,6 % en poids de niobium. Le seul exemple de réalisation présenté dans cette demande porte sur la fabrication par fusion à l'arc d'une tôle laminée composée d'un alliage de zirconium incorporant en poids 1 % de niobium et 1,6 % d'erbium.

Cette technologie présente toutefois des inconvénients et des limitations, dont certains seront exposés ci-après. Ainsi, l'analyse microstructurale de l'alliage de zirconium comprenant de l'erbium constituant la tôle laminée révèle la présence de précipités d'oxydes d'erbium grossiers (d'une taille moyenne de l'ordre voire supérieure au micromètre) défavorables aux propriétés mécaniques comme cela est illustré dans les exemples qui suivent. De façon générale, aucun exemple ne démontre l'obtention des propriétés mécaniques, mais également neutroniques, imposé par le cahier des charges relatif à une gaine de combustible nucléaire, en particulier pour une application visant des très forts taux de combustion (supérieurs à 70 GWj/tU).

Une deuxième famille de solutions concerne une gaine de combustible nucléaire à deux couches, dans laquelle une couche interne d'alliage de zirconium comprenant de l'erbium est intercalée entre le combustible et la couche externe de cette gaine constituée d'un alliage industriel déjà qualifié, résistant notamment à la corrosion.

Ce concept de gaine de combustible nucléaire à deux couches est illustré par le brevet US 5,241,571 [4] qui propose d'incorporer différents éléments chimiques et de l'erbium entre 0,05 % et 2 % en poids dans un alliage de zirconium dérivé du Zircaloy^{®}-4.

Il est également illustré par le brevet US 5,267,290 [5] dans lequel la couche externe est constituée par un alliage de zirconium de type Zircaloy^{®}-2 ou Zircaloy^{®}-4 et la couche interne est constituée par un alliage de zirconium faiblement allié incorporant différents éléments chimiques (dont le silicium) et soit de l'erbium naturel jusqu'à environ 20 % en poids soit l'isotope ¹⁶⁷Er jusqu'à environ 5 % en poids.

Si l'on analyse globalement les brevets des deux familles de solutions décrites précédemment, les limitations suivantes apparaissent :
i) il existe un problème rédhibitoire de tenue à la corrosion de la couche d'alliage de zirconium comprenant de l'erbium lorsque la gaine de combustible nucléaire qui la contient est mise en oeuvre dans un milieu oxydant, tel que de l'eau pressurisée (REP) ou de la vapeur d'eau (REB). En effet, la capacité de l'erbium à induire la corrosion d'alliages de zirconium en température de fonctionnement de réacteur nucléaire a été mis en évidence dans le document H.H. Klepfer, D.L. Douglass, J.S. Armijo, "Specific zirconium alloy design program", First Quaterly Progress Report, (Feb. - June 1962), GEAP-3979, US Atomic Energy Commission [3].
   D'autre part, la formation de précipités d'oxyde d'erbium grossiers (d'une taille moyenne de l'ordre voire supérieure au micromètre) générés par les traitements thermiques des procédés de fabrication et/ou de mise en forme (tels que les traitements dits « d'homogénéisation » en phase Bêta du zirconium à haute température (≥ 1000°C) pratiqués couramment au stade amont de la gamme de fabrication) peuvent s'avérer particulièrement néfastes vis à vis des propriétés mécaniques, telles que par exemple la ductilité (capacité d'un matériau à se déformer plastiquement sans se rompre) et la ténacité (capacité d'un matériau qui possède à la fois une forte résistance maximale à la rupture (dite résistance mécanique) et une faible aptitude à la propagation des fissures) dont on pouvait déjà craindre une première détérioration due à la faible solubilité à basse température (c'est à dire inférieure ou égale à 600°C) de l'erbium dans le zirconium-alpha.
   Par ailleurs, des tests d'oxydation en autoclave à 350°C en eau pure pressurisée sur des alliages de zirconium comprenant 1,5 % à 10 % en poids d'erbium ont confirmé que l'erbium accélérait de manière importante, voire rédhibitoire, la corrosion dans de telles conditions.
   Ainsi, en pratique, lors du contact avec le milieu oxydant, soit de la face externe de la gaine de combustible nucléaire pour ce qui est de la première famille de solutions, soit de la couche interne d'une gaine de combustible nucléaire à deux couches en cas de perçage ou de fissuration accidentels d'une telle gaine pour ce qui est de la deuxième famille de solutions; l'oxydation de l'alliage de zirconium se trouve alors fortement accélérée à cause de l'erbium qu'elle incorpore. Cette oxydation peut conduire à une fragilisation de la gaine, suivie éventuellement de son endommagement voire de sa destruction. Ceci rend le concept de ces deux premières familles de solution dangereux et difficilement acceptable du point de vue de la sûreté, le combustible nucléaire pouvant se répandre à l'extérieur de sa gaine.
ii) lors des étapes de mise en forme telles qu'un filage ou un laminage, la couche de la gaine de combustible nucléaire contenant l'erbium est en contact prolongé (frottement intense) avec l'outillage. Ceci conduira nécessairement à une pollution plus ou moins rapide de l'outillage et à la création éventuelle de débris et de copeaux contenant une quantité significative d'erbium. Par suite, lorsque les lignes de fabrication seront amenées à être utilisées pour la mise en forme d'autres produits en alliage de zirconium « plus standards » (par exemple alliages de gaine industriel de type Zircaloy^{®}-2 et Zircaloy^{®}-9, M5^{®}, **...** ) pour lesquels les spécifications imposent des niveaux d'impuretés d'éléments neutrophages tels que l'erbium particulièrement bas, ceux-ci risquent de subir une pollution de surface non contrôlée. Cela implique une finition de surface et des contrôles supplémentaires complexes, voire de dédier une chaîne entière à la fabrication de la couche interne d'alliage de zirconium comprenant de l'erbium et/ou de l'ensemble de la gaine de combustible nucléaire comprenant cette couche interne. Tout ceci conduirait alors à un « surcoût » de fabrication prohibitif ;
iii) quel que soit le document considéré, les propriétés recherchées pour une gaine de combustible nucléaire n'ont pas été caractérisées ni donc validées, en particulier les propriétés mécaniques et/ou neutroniques.

Enfin, une troisième famille de solutions porte sur une gaine de combustible nucléaire à trois couches qui consiste à intercaler une couche intermédiaire, contenant de l'erbium en tant que poison neutronique consommable, entre une couche externe et une couche interne constituées d'alliage de zirconium.

Le brevet US 6,426,476 [6] propose des solutions de réalisation de plaques multicouches, l'une au moins des couches étant constituée d'une terre rare. En particulier, le brevet décrit la faisabilité d'une plaque à trois couches : les couches externe et interne sont constituées de Zircaloy^{®}-4 et la couche intermédiaire est constituée d'erbium pur (la couche ne contient donc pas de zirconium) sous forme d'un feuillard de faible épaisseur (100 à 200 µm). Les exemples de réalisation présentés montrent :
- l'impossibilité de réaliser une structure à trois couches co-laminable à froid et même à chaud (800°C) par des procédés conventionnels;
- la possibilité d'obtenir une plaque à trois couches Zircaloy^{®}-4/erbium/Zircaloy^{®}-4 qui a pu être co-laminée avec succès en utilisant un procédé préalable de dépôt selon la technique dite de « electrospark-deposition » (ESD) sous atmosphère contrôlée.

En fait, la technologie ici décrite souffre de limitations et d'inconvénients parfois rédhibitoires pour une gaine de combustible nucléaire :
- les procédés de fabrication décrits apparaissent compliqués, longs, coûteux et non transposables de manière évidente à une échelle industrielle ;
- seules des gaines sous forme de fines plaquettes ont pu être réalisées. Or, vu les limitations précitées des procédés de fabrication, la réalisation de tubes de gaine combustible de géométries plus complexes apparaît extrêmement difficile voire impossible à réaliser ;
- le choix d'utiliser de l'erbium pur sous forme de feuillard métallique est coûteux et complexe car il est nécessaire à chaque étape de fabrication d'éviter l'oxydation de l'erbium, matériau particulièrement avide d'oxygène. Ensuite, sa mise en oeuvre dans une gaine de combustible nucléaire à trois couches conduit à une structure avec des discontinuités métallurgiques brutales entre les différentes couches. D'un point de vue mécanique, une telle structure n'est pas adaptée à des cyclages en température en service et/ou en conditions accidentelles (par exemple on peut craindre des phénomènes de dilatation différentielle entraînant un délaminage). Du point de vue de l'effet de l'irradiation neutronique (endommagement de la matrice métallique par les chocs « balistiques » dus aux neutrons sur le réseau cristallin), on peut s'attendre sous irradiation à un comportement différent et pénalisant de l'erbium pur par rapport aux alliages de zirconium entraînant là encore des phénomènes différentiels de gonflement, fragilisation, ...
Enfin, au sein de la troisième famille de solutions, il est à noter que si la demande de brevet FR 2789404 [1] précitée évoque la possibilité de réaliser une gaine de combustible nucléaire à deux ou trois couches, aucun exemple de réalisation ne vient étayer cette possibilité, en particulier lorsqu'il s'agit de réaliser une gaine de combustible nucléaire sous forme d'un tube. A fortiori, l'adéquation des propriétés d'une telle gaine avec le cahier des charges attendu est absente, en particulier concernant les propriétés mécaniques, neutroniques ou la microstructure (par exemple la continuité métallurgique et mécanique entre les trois couches). Des calculs de neutronique ont montré qu'une couche intermédiaire d'épaisseur significativement inférieure à l'épaisseur totale de la gaine (c'est à dire une couche intermédiaire dont l'épaisseur représente typiquement environ 1/6 et au plus 2/3 de l'épaisseur totale) et constituée d'un alliage de zirconium comprenant de l'erbium naturel à 0,1 % à 3,0 % en poids ne permet pas de respecter l'empoisonnement recherché pour l'ensemble du volume de la gaine de combustible nucléaire dans le cadre de l'utilisation de cette gaine pour de forts taux de combustion pouvant atteindre 120 GWj/t.

Les inconvénients et limitations précitées concernant la gaine à une couche présentée par ailleurs dans la demande de brevet FR 2789404 [1] restent bien entendu valables lorsqu'une gaine à trois couches est envisagée.

### EXPOSÉ DE L'INVENTION

Un but de l'invention est donc de pallier les problèmes et inconvénients des techniques existantes en fournissant un alliage de zirconium comprenant de l'erbium qui possède une ductilité, qui permet la fabrication et la mise en forme d'une pièce de structure comprenant cet alliage (cette pièce, par exemple une gaine de combustible nucléaire, pouvant être de forme variée, par exemple de la forme d'une plaque ou d'un tube), mais également une résistance mécanique et une ténacité garante de la bonne tenue mécanique de cette pièce, notamment aux températures de fonctionnement d'un réacteur nucléaire et/ou sous irradiation neutronique.

Un autre but de l'invention est de fournir un alliage de zirconium comprenant une quantité suffisante d'erbium en tant que poison neutronique consommable afin que cet alliage puisse être incorporé dans une pièce telle qu'une gaine de combustible nucléaire, qui permette d'augmenter la longueur des cycles de combustion et corrélativement le taux de combustion d'un réacteur nucléaire, et ce notamment sans incorporer de l'erbium (ou son isotope ¹⁶⁷Er) sous forme pure ou en proportion majoritaire dans un alliage de zirconium au sein de la gaine.

Afin d'atteindre ces buts, et d'autres encore, l'invention concerne un alliage de zirconium, comprenant de l'erbium comme poison neutronique consommable, l'alliage comprenant en poids :
- de 3 à 12 % d'erbium, préférentiellement 4 à 10 % d'erbium ;
- de 0,005 à 5 % d'éléments supplémentaires tels que des additifs et/ou des impuretés de fabrication ;
- et le reste de zirconium.

Au sens de l'invention, on entend par « reste de zirconium » le pourcentage en poids de zirconium à rajouter à l'erbium et aux éléments supplémentaires pour atteindre 100 % en poids.

Les additifs incorporés à l'alliage de zirconium selon l'invention visent à renforcer les propriétés, notamment mécaniques, de l'alliage.

L'invention concerne également une pièce de structure comprenant un alliage de zirconium.

Préférentiellement, une pièce selon l'invention peut être constituée par un élément de la structure interne du coeur d'un réacteur nucléaire. Il peut s'agir par exemple d'un élément proche dans l'espace du combustible nucléaire, tel qu'un élément constitutif d'une barre d'absorbant, d'un tube guide ou d'une grille d'espacement. En particulier, il s'agit d'une gaine de combustible nucléaire.

Toujours de façon préférentielle, la pièce selon l'invention est sous la forme d'une plaque, par exemple constitutive des structures d'un combustible à plaques, ou sous la forme d'un tube.

L'invention concerne en outre un procédé de métallurgie des poudres pour la fabrication et éventuellement la mise en forme de l'alliage de zirconium selon l'invention, le procédé comprenant un frittage sous atmosphère inerte ou sous vide de l'alliage sous forme de poudre homogène, suivi éventuellement d'au moins une étape d'usinage.

Enfin, l'invention concerne un procédé de fusion pour la fabrication et éventuellement la mise en forme de l'alliage de zirconium selon l'invention comprenant les étapes suivantes réalisées préférentiellement sous atmosphère inerte ou sous vide :
- une fusion suivie d'une solidification dans un moule d'un mélange du zirconium, de l'erbium et des éléments supplémentaires ; puis,
- éventuellement un usinage, tel un fraisage et/ou un sablage.

Comme cela est montré dans les exemples de réalisation qui suivent, le fait que l'alliage de zirconium selon l'invention comprend en poids de 3 à 12 % d'erbium (préférentiellement 4 à 10 %) a pour effets avantageux i) que la laminabilité d'un tel alliage est suffisamment bonne pour obtenir facilement des pièces de géométrie finale déterminée à l'aide du procédé de fusion de l'invention et ii) qu'une telle teneur d'erbium en tant que poison neutronique consommable permet de réaliser une gaine de combustible nucléaire telle que la longueur des cycles de combustion et corrélativement le taux de combustion d'un réacteur nucléaire peuvent être augmentés.

D'autres objets, caractéristiques et avantages de l'invention apparaîtront mieux à la lecture de la description qui suit, donnée à titre illustratif et non limitatif en référence aux figures suivantes.

### DESCRIPTION BREVE DES FIGURES

La Figure 1 représente le diagramme de phases binaire zirconium-erbium extrait de la référence [7].
La Figure 2 représente des micrographies obtenues par microscopie électronique en transmission sur lames minces illustrant l'état de précipitation des oxydes d'erbium avant (cliché du haut) et après optimisation des traitements thermiques au cours de la gamme de fabrication (cliché du bas) d'un alliage MS^{®} à environ 1,6 % en poids d'erbium.
La Figure 3 représente le profil de répartition de l'erbium obtenu par microsonde électronique au sein d'une plaque en alliage de zirconium comprenant 17 % en poids d'erbium.
La Figure 4 représente une micrographie optique en lumière polarisée obtenue dans l'épaisseur d'une gaine de combustible nucléaire à trois couches.
Les Figures 5A et 5B représentent l'aspect de la surface interne d'une gaine de combustible nucléaire à une couche en alliage de zirconium M5^{®} sans erbium (5A), et à deux couches avec une couche externe en alliage de zirconium M5^{®} sans erbium et une couche interne à base d'alliage de zirconium « Zr-D » comprenant de l'erbium (5B).
Les Figures 6A et 6B représentent les aspects macroscopiques de la rupture par pression interne de tronçons des gaines représentées respectivement sur les figures 5A et 5B.
La Figure 7 représente l'évolution de l'anti-réactivité en fonction du taux de combustion apportée par différents poisons neutroniques.
La Figure 8 représente la composition en poids d'un alliage de zirconium faiblement allié utilisé pour fabriquer un alliage de zirconium comprenant de l'erbium selon l'invention.
Les Figures 9A et 9B représentent respectivement la micrographie optique de l'épaisseur d'une gaine de combustible nucléaire monocouche et comportant trois couches, hydrurées toutes deux jusqu'à une teneur globale de 400 à 450 ppm en poids.
Les Figures 10A et 10B représentent respectivement un grossissement d'une zone des micrographies 9A (zone quelconque) et 9B (zone localisée juste en dessous de la surface externe de la gaine).

### DESCRIPTION DETAILLEE DE L'INVENTION

### 1 - Fabrication par un procédé de fusion de l'alliage selon l'invention et propriétés mécaniques de l'alliage obtenu.

Des plaques constituées de l'alliage de zirconium comprenant de l'erbium ont été fabriquées et mises en forme par le procédé de fusion de l'invention.

Préférentiellement, ce procédé de fusion peut comprendre en outre une ou plusieurs des étapes suivantes réalisées préférentiellement sous atmosphère inerte ou sous vide :
- une refusion suivie d'une solidification dans un moule :
- un traitement thermique ;
- une mise en forme à chaud et/ou à froid, tel un laminage :
- un usinage, tel un fraisage et/ou un sablage.

Plus précisément, le procédé de fusion comprend la succession des étapes suivantes réalisées éventuellement sous atmosphère inerte ou sous vide :
- une refusion suivie d'une solidification ;
- un premier traitement thermique ;
- un usinage, préférentiellement un fraisage ;
- une étape de mise en forme à chaud et/ou à froid, préférentiellement un laminage ;
- un usinage, préférentiellement un sablage :
- un deuxième traitement thermique ;
- un laminage à froid final ;
- un traitement thermique final.

Toutes les teneurs relatives à un élément chimique indiquées dans la présente description sont exprimées, sauf indication contraire, en partie-par-million (ppm) en poids ou en pourcentage (%) en poids.

### 1.1 - Fabrication par un procédé de fusion de plaques constituées de l'alliage de zirconium selon l'invention.

Des lingotins d'alliage de zirconium à 6 %, 10 % et 17 % en poids d'erbium ont été réalisés par fusion à l'arc suivie d'une mise en forme afin d'obtenir des plaques d'environ 1 mm d'épaisseur, quelques dizaines de cm de longueur et quelques cm à 20 cm de largeur. De telles plaques peuvent constituer la couche intermédiaire d'une gaine de structure composite selon l'invention.

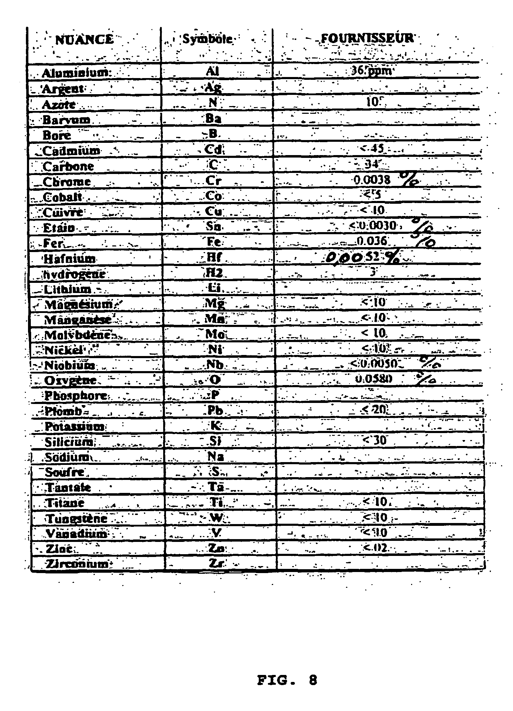

Pour la fabrication de ces alliages, de l'alliage de zirconium faiblement allié et de pureté supérieure à 99,5 % (alliage dit de « grade D » appelé « Zr-D » dont la composition en poids se trouve reproduite sur la figure 8 dans laquelle les teneurs des différents éléments sont exprimées, en absence d'autre indication, en ppm en poids) a été introduit avec de l'erbium métallique (pureté de l'ordre de 99,0 %) se présentant sous forme de pépites de 10 à 50 grammes dans un creuset en cuivre refroidi par une circulation d'eau, puis ils ont été fondus sous argon dans un four à arc de fusion électrique à électrode non consommable afin d'obtenir trois alliages de zirconium à 6 %, 10 % et 17 % en poids d'erbium.

Les étapes de laminage qui ont suivi ont été réalisées sur les alliages de zirconium « Zr-D » comprenant en poids 0 %, 6 % et 10 % d'erbium (l'alliage à 17 % d'erbium en poids ayant montré une fissuration précoce lors du laminage à chaud initial) sur un laminoir réversible d'une puissance de 73 kW équipé de deux paires de cylindres duo pour le laminage à chaud et à froid.

De façon optionnelle, en fonction de la composition initiale de l'alliage de zirconium qui est fondu avec l'erbium, l'alliage selon l'invention peut être un alliage de zirconium dans lequel les additifs comprennent en poids :
- moins de 3 % de niobium, préférentiellement moins de 0,1 % ;
- moins de 2 % d'étain, préférentiellement moins de 0,1 % ;
- moins de 0,6 % de nickel, préférentiellement moins de 0,01 % ;
- moins de 0,6 % de molybdène, préférentiellement moins de 0,01 % ;
- moins de 0,6 % de cuivre, préférentiellement moins de 0,01 % ;
- moins de 0,6 % de fer, préférentiellement moins de 0,1 % ;
- moins de 0,2 % de chrome, préférentiellement moins de 0,01 % ;
- moins de 0,16 % d'oxygène en solution solide, préférentiellement moins de 0,08 %.

On entend par « oxygène en solution solide » désigner de l'oxygène en solution solide dans la matrice zirconium-alpha, à savoir la fraction résiduelle de l'oxygène qui n'a pas précipité pour former des oxydes d'erbium et qui se retrouve donc en insertion au sein de la structure cristalline zirconium-alpha de la matrice.

Ces additifs peuvent en particulier permettre de conférer ou renforcer diverses propriétés de l'alliage selon l'invention. Ils peuvent être rajoutés au cours du procédé de fabrication de l'alliage de zirconium selon l'invention et/ou entrer dans la composition initiale du zirconium et/ou de l'erbium servant à fabriquer l'alliage de l'invention.

La teneur en oxygène de l'alliage de zirconium selon l'invention peut être ajustée en fonction de la quantité d'erbium préalablement ajoutée, en tenant compte du fait que tout ou partie de cet oxygène (à laquelle il faut ajouter la quantité d'oxygène incorporée dans l'alliage suite aux traitements thermiques de fabrication et/ou de mise en forme) précipitera essentiellement sous forme d'oxydes d'erbium Er₂O₃ et que l'on peut ainsi viser une teneur en oxygène résiduelle en solution solide inférieure à 0,16 % en poids (préférentiellement inférieure à 0,08 % en poids) dans la structure de l'alliage de zirconium pour compenser l'effet éventuellement durcissant et/ou fragilisant de l'erbium.

Par ailleurs, l'alliage de zirconium selon l'invention peut comprendre en poids les impuretés de fabrication suivantes :
- moins de 120 ppm de silicium, préférentiellement moins de 40 ppm, encore plus préférentiellement moins de 30 ppm ;
- moins de 100 ppm de soufre, préférentiellement de 10 à 100 ppm ;
- moins de 20 ppm de chlore ;
- moins de 10 ppm de phosphore, préférentiellement de 2 à 10 ppm ;
- moins de 10 ppm de bore, préférentiellement de 0,1 à 10 ppm ;
- moins de 10 ppm de calcium, préférentiellement de 0,1 à 10 ppm ;
- moins de 50 ppm, préférentiellement moins de 5 ppm, encore plus préférentiellement moins de 0,1 ppm, de chacun des éléments suivants : lithium, fluor, métaux lourds.

Les impuretés de fabrication et leurs teneurs dans l'alliage selon l'invention sont celles typiquement rencontrées dans les alliages de zirconium industriels et sont en tout état de cause telles que le rendement neutronique et les propriétés mécaniques usuelles de l'alliage selon l'invention ne sont pas perturbés.

Les modes de fabrication de ces alliages vont maintenant être décrits plus en détail.

### 1.1.1 - Fabrication par un procédé de fusion d'une plaque d'alliage de zirconium comprenant 6 % en poids d'Erbium.

Pour l'alliage à 6 % en poids d'erbium, un moule, tel un creuset, a été utilisé pour fondre un volume d'alliage d'environ 45 cm³, soit un poids de l'ordre de 300 grammes.

Quatre refusions sous argon suivies à chaque fois d'une solidification ont ensuite été effectuées afin de favoriser une bonne homogénéité chimique, en particulier une répartition homogène de l'erbium dans la matrice de zirconium.

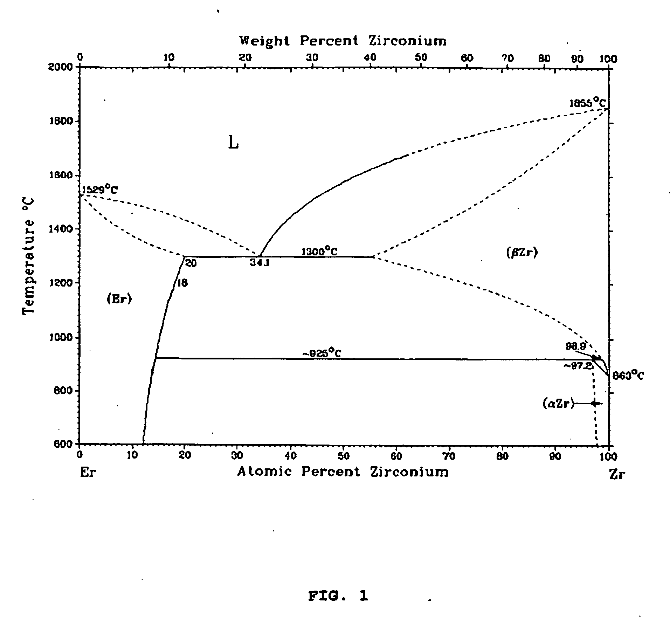

Les lingotins ainsi obtenus d'une épaisseur typique de 8 à 12 mm, d'une longueur d'une dizaine à une vingtaine de centimètres, d'une largeur de 5 à 10 cm, ont ensuite été extraits du creuset pour subir un traitement thermique, à savoir un recuit d'homogénéisation sous vide pendant 1 heure à une température de 800°C, température à laquelle le zirconium présente une microstructure majoritairement (typiquement plus de 50% en volume) zirconium-alpha tel que cela apparaît par exemple sur le diagramme de phase reproduit sur la figure 1. Puis, afin de préparer le laminage, les deux faces des lingotins ont été dressées par fraisage pour réduire l'épaisseur de chaque face d'environ 1 mm afin d'obtenir des lingotins d'une épaisseur de 8 à 10 mm.

Ceux-ci ont été laminés à chaud (taux de déformation maximum ε = 50 %) à une température de 700°C jusqu'à une épaisseur de 5 mm en trois passes. Puis, ils ont été sablés pour éliminer l'oxydation de surface et traités thermiquement à 580°C, sous vide, pendant 5 heures..

Une première opération de laminage à froid (taux de déformation maximum ε = 60 %) permettant de ramener l'épaisseur des lingotins à 2 mm a été suivie par une deuxième opération de laminage à froid (taux de déformation maximum ε = 40 %) permettant d'obtenir une plaque d'épaisseur de 1,2 mm, chaque opération de laminage étant à chaque fois suivie par un recuit à 580°C, sous vide, d'une durée de 5 heures.

### 1.1.2 - Fabrication par un procédé de fusion d'une plaque d'alliage de zirconium comprenant 10 % en poids d'Erbium.

Pour l'alliage à 10 % en poids d'erbium, on a utilisé un moule, tel un creuset, plus petit et permettant de fondre un volume d'alliage d'environ 10 cm³, soit un poids de l'ordre de 65 grammes.

Dans le même but que précédemment, cinq refusions sous argon suivies à chaque fois d'une solidification ont ensuite été effectuées.

Les lingotins ainsi obtenus d'une épaisseur de 8 mm, d'une longueur d'une dizaine de centimètres, d'une largeur de quelques centimètres, ont ensuite été extraits du creuset pour subir un traitement thermique, à savoir un recuit d'homogénéisation sous vide pendant 1 heure à une température de 800°C. Puis, afin de préparer le laminage, les deux faces des lingotins ont été dressées par fraisage afin d'obtenir des lingotins d'une épaisseur de 6 mm.

Les étapes de laminage qui ont suivi ont quelque peu différé de celles appliquées précédemment aux lingotins constitués de l'alliage de zirconium à 6 % en poids d'erbium, afin de tenir compte de la teneur plus élevée en erbium et du caractère pyrophorique de cet élément.

Ainsi, le lingotin constitué de l'alliage de zirconium à 10 % en poids d'erbium a été placé dans une trousse en alliage de zirconium de type Zircaloy^{®}-4, alliage bien connu de l'homme du métier. Cette trousse était rendue étanche par soudage aux rives afin de protéger les lingotins des risques d'oxydation et de limiter les gradients thermiques lors du laminage.

Ces lingotins ont été co-laminés à chaud (taux de déformation maximum ε = 76 %) à une température de 700°C jusqu'à une épaisseur de 1,4 mm. Puis, ils ont été sablés pour éliminer l'éventuelle oxydation de surface et traités thermiquement à 700°C, sous vide, pendant 1 heure.

Ensuite, par laminage à froid (taux de déformation maximum ε = 21 %), une plaque de 1,1 mm d'épaisseur a été obtenue, ce qui correspond à l'épaisseur minimale requise pour le prélèvement des éprouvettes de traction qui seront mises en oeuvre dans les essais mécaniques décrits ci-après. Finalement, un dernier recuit a été réalisé à 700°C, sous vide, pendant 1 heure.

### 1.1.3 - Fabrication par un procédé de fusion d'un alliage de zirconium comprenant 17 % en poids d'Erbium.

Un alliage de zirconium comprenant 17 % en poids d'erbium a été élaboré selon un mode opératoire identique à l'exemple précédent (plaque d'alliage de zirconium à 10 % en poids d'erbium), à l'exception des étapes de laminage nécessaires pour obtenir les géométries finales désirées car un alliage avec une telle teneur en erbium s'est révélé posséder une faible capacité à être laminée même à chaud.

Ainsi, divers essais ont permis de déterminer qu'une laminabilité (et donc une ductilité) suffisamment bonne ne peut être obtenue que pour des alliages de zirconium comprenant en poids de 3 à 12 % d'erbium (préférentiellement 4 à 10 %).

### 1.2 - Microstructure d'un alliage de zirconium selon l'invention fabriqué par un procédé de fusion.

Comme évoqué précédemment, le brevet FR 2789404 [1] signale la précipitation d'oxydes d'erbium grossiers dans un alliage comprenant environ 1,6 % en poids d'erbium, ceci étant du au(x) traitement(s) thermique(s) « conventionnels » de fabrication et/ou de mise en forme qui ont été appliqués.

De telles inclusions d'oxydes sont a priori défavorables vis-à-vis de la ductilité et rien ne laissait présager de l'obtention de propriétés mécaniques satisfaisantes de l'alliage de zirconium selon l'invention.

Au contraire, une telle microstructure apparait trop grossière pour conduire à des propriétés mécaniques acceptables, en particulier pour une application en milieu nucléaire.

Or, avantageusement, le procédé de fusion selon l'invention est tel qu'au moins un des traitements thermiques, préférentiellement le premier traitement thermique d'homogénéisation post-solidification, consiste en un chauffage (de préférence sous vide ou sous atmosphère inerte) à une température telle que l'alliage de zirconium présente une microstructure qui comprend - à la température du traitement thermique - à plus de 50 % du zirconium-alpha, préférentiellement plus de 70 %, encore plus préférentiellement plus de 90 %.

Un tel traitement thermique limite voire annule la croissance/coalescence des oxydes d'erbium tout en permettant de garder une répartition homogène de l'erbium dans l'alliage de zirconium de l'invention et/ou empêcher la ségrégation de l'erbium sous forme de précipités d'erbium, en particulier trop grossiers, c'est à dire d'une taille moyenne supérieure ou égale au micromètre.

Ainsi, dans un tel mode de réalisation, le procédé de fusion de l'invention est tel que, par exemple, au moins un des traitements thermiques, préférentiellement le premier traitement thermique, consiste en un chauffage (de préférence sous vide ou sous atmosphère inerte) à une température comprise entre 600 °C et 1000 °C, préférentiellement 800 °C (par exemple pendant 1 heure), cette dernière température correspondant à une microstructure comprenant plus de 90% de zirconium-alpha pour l'alliage de zirconium selon l'invention tel que fabriqué dans l'exemple 1.

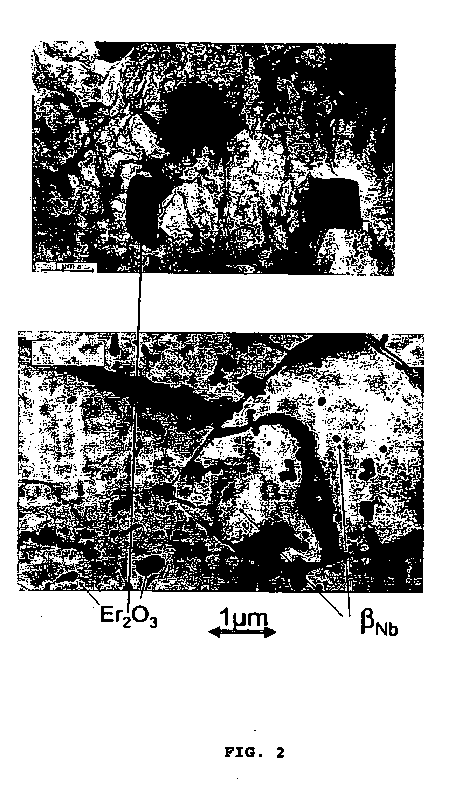

La Figure 2 illustre un exemple de microstructure ainsi optimisée (cliché du bas) et telle qu'observée en microscopie électronique en transmission sur lame mince qui est à comparer à la microstructure préliminaire non optimisée par le procédé de fusion de l'invention et telle que décrite dans le brevet FR 2789404 [1] (cliché du haut). On peut observer un affinement très important des oxydes d'erbium qui présentent une taille de l'ordre de quelques dizaines à quelques centaines de nanomètres, affinement indispensable pour améliorer suffisamment la ductilité et/ou la ténacité d'un tel alliage.

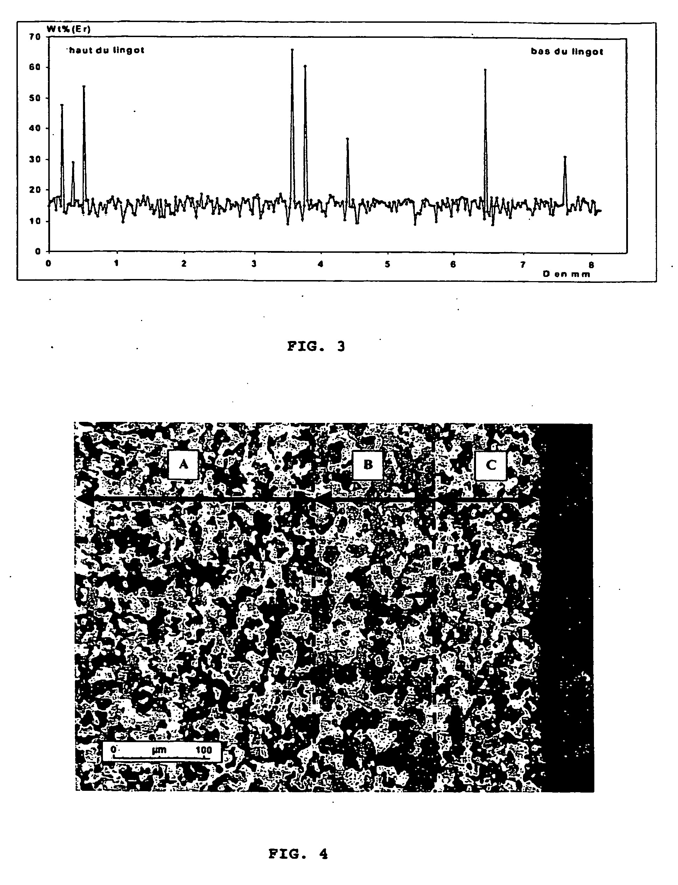

A l'aide d'une microsonde électronique, un profil de répartition de l'erbium dans un alliage de zirconium comprenant 17 % en poids d'erbium a été réalisé au sein d'un lingotin à l'état brut de solidification, c'est à dire obtenu directement après les étapes de refusion précitées. Ce profil est représenté sur la Figure 3. Il illustre une répartition macroscopiquement homogène de l'erbium, même si localement des enrichissements dus à la présence de quelques précipités d'oxyde d'erbium ont été observés. Une répartition encore plus homogène est obtenue pour les alliages de zirconium à 6 % et 10 % en poids d'erbium.

Ainsi, selon une disposition préférée de l'invention, l'erbium est réparti de manière homogène dans l'alliage de zirconium de l'invention et/ou il n'existe pas de ségrégation/fluctuation décelable ou significative de l'erbium sous forme de précipités d'erbium, en particulier grossiers (c'est à dire de taille moyenne supérieure à 1 micromètre).

Selon une autre disposition préférée de l'invention, tout ou partie de l'erbium se trouve dans l'alliage de zirconium sous forme de précipités d'oxydes complexes contenant en poids principalement de l'erbium. Préférentiellement, les précipités d'oxydes sont répartis de manière homogène dans l'alliage de zirconium et/ou sont de taille moyenne inférieure ou égale à un micromètre, plus préférentiellement inférieure ou égale à 500 nanomètres, encore plus préférentiellement comprise entre 5 nanomètres et 200 nanomètres, sachant qu'une réduction de cette taille s'accompagne au sein de l'alliage de zirconium de l'invention d'une meilleure continuité métallurgique, de meilleures propriétés mécaniques (ductilité et/ou ténacité en particulier) ainsi que d'une répartition plus homogène de l'hydrogène en cas par exemple d'hydruration d'une gaine de combustible nucléaire comprenant cet alliage.

Au sens de l'invention, on entend par « oxydes complexes » des oxydes comprenant de l'erbium et éventuellement du zirconium et/ou certains additifs et/ou impuretés de fabrication. Il s'agit en particulier de l'oxyde « pur » Er₂O₃. Par ailleurs, on entend par « taille moyenne » la valeur moyenne du diamètre des précipités d'oxydes lorsqu'ils sont substantiellement sphériques, ou la valeur moyenne des dimensions principales de ces objets lorsqu'ils ne sont pas substantiellement sphériques.

### 1.3 - Caractéristiques mécaniques usuelles de traction.

Les caractéristiques mécaniques usuelles de traction obtenues à 20°C et 325°C (cette dernière température étant proche des températures d'une gaine de combustible nucléaire d'un REP en service) ont été mesurées deux fois sur différentes éprouvettes de traction prélevées dans des plaques d'alliage fabriquées dans les exemples précédents selon le procédé de fusion de l'invention. Ces plaques ont été réalisées par fusion d'erbium avec l'alliage de zirconium faiblement allié dit « Zr-D ». Tous ces matériaux sont à l'état recristallisé.

Pour pouvoir comparer de manière fiable les propriétés des alliages de zirconium comprenant de l'erbium selon l'invention à celles des mêmes alliages de référence (sans erbium), tous ces alliages doivent être réalisés selon la même gamme, c'est à dire avoir subi les mêmes étapes de fabrication et de mise en forme. Compte tenu des moyens de fabrication mis en oeuvre, les structures, les textures cristallographiques et les propriétés des alliages de zirconium selon l'invention peuvent être encore optimisées selon la géométrie finale visée (notamment plaque ou tube) et en fonction des sollicitations mécaniques usuelles à prendre en considération.

Le tableau 1 ci-après présente les résultats des tests mécaniques réalisés.

Les abréviations utilisées dans le tableau 1 correspondent aux grandeurs usuelles déduites d'un essai mécanique de traction, à savoir :
- Rp 0 % = limite d'élasticité conventionnelle à 0 % de déformation plastique ;
- Rp 0,2 % = limite d'élasticité conventionnelle à 0,2 % de déformation plastique ;
- Rm = résistance maximale à rupture (encore appelée résistance mécanique) ;
- Ar = allongement réparti (allongement plastique uniforme jusqu'à Rm) ;
- At = allongement total à rupture, qui permet de rendre compte de la ductilité.

**TABLEAU 1**

| Nuance d'alliage (géométrie plaque) | Température (°C) | Rp 0% (Mpa) | Rp 0,2% (Mpa) | Rm (Mpa) | Ar (%) | At (%) |
|---|---|---|---|---|---|---|
| Référence « Zr-D » sans erbium | 20 | 145 | 192 | 321 | 16,3 | 38 |
| | | 146 | 191 | 307 | 16,6 | 38,3 |
| | 325 | 48 | 63 | 123 | 36,0 | 65,7 |
| | | 38 | 55 | 114 | 36,0 | 78,0 |
| « Zr-D » + 6% d'erbium | 20 | 207 | 245 | 401 | 16,7 | 35,2 |
| | | 203 | 241 | 395 | 17,8 | 35,4 |
| | 325 | 92 | 129 | 231 | 17,7 | 31,0 |
| | | 97 | 132 | 235 | 18,1 | 32,2 |
| « Zr-D » + 10% d'erbium | 20 | 107 | 209 | 374 | 12,7 | 21,7 |
| | | 102 | 221 | 373 | 11,1 | 21,3 |
| | 325 | 70 | 109 | 187 | 10,5 | 21,9 |
| | | 62 | 112 | 212 | 7,0 | 17,2 |

On peut noter que les deux alliages comprenant de l'erbium, malgré le fait qu'ils soient faiblement alliés, présentent des caractéristiques mécaniques qui restent bonnes par comparaison au même alliage de référence sans erbium, l'incorporation d'erbium s'accompagnant globalement d'une augmentation de la résistance mécanique et d'une diminution corrélative de la ductilité.

Plus précisément, le tableau 1 fait apparaître que l'alliage de zirconium comprenant 6 % d'erbium présente une valeur optimale pour les paramètres Rp 0 %, Rp 0,2 % et Rm qui rendent compte de la résistance mécanique de l'alliage, tout en conservant de bonnes valeurs de ductilité (paramètres At et Ar). Des mesures complémentaires ont permis de confirmer un comportement mécanique similaire pour une teneur en erbium de 4 à 8 % en poids.

Ainsi, préférentiellement, l'alliage de zirconium de l'invention comprend en poids de 4 à 8 % d'erbium.

Encore plus préférentiellement, l'alliage de zirconium de l'invention comprend en poids de 5 à 7 % d'erbium, préférentiellement environ 6 %.

Le comportement mécanique précité et spécifique à une gamme de teneur en erbium de 4 à 8 % en poids est tout à fait inattendu, l'homme du métier ne pouvant préjuger de l'effet de l'ajout de l'erbium sur les propriétés mécaniques d'un tel alliage de zirconium.

En effet, pour l'intervalle de teneur spécifique de 4 à 8 % en poids d'erbium, l'alliage de zirconium de la présente invention présente une microstructure biphasée (matrice zirconium-alpha comprenant de l'erbium), voire une microstructure triphasée si l'on tient compte de la précipitation additionnelle potentielle d'oxydes d'erbium ; qui de façon inattendue présente i) une ductilité qui n'est pas significativement diminuée, ii) un optimum de la résistance mécanique (alors qu'un accroissement ou une diminution monotone sont attendus), iii) cet optimum ayant à la fois à 20°C et à 325°C (température moyenne en service d'une gaine de combustible nucléaire REP) une valeur très proche de la limite d'élasticité et de la résistance mécanique d'un alliage de zirconium industriel tel que l'alliage de zirconium M5^{®} constitutif des couches interne et externe d'une gaine de combustible nucléaire à trois couches selon l'invention.

Donc, contre toute attente, l'alliage de zirconium de l'invention comprenant 4 à 8 % en poids d'erbium présente un optimum de résistance mécanique, et ce tout en gardant une ductilité qui n'est pas significativement diminuée (en particulier à 20°C) et qui est en tout état de cause suffisante pour autoriser une mise en forme de cet alliage, par exemple selon le procédé de fusion de l'invention.

En pratique, cela présente un avantage essentiel lorsqu'un tel alliage de zirconium rentre dans la composition d'une gaine de combustible nucléaire, en particulier dans la couche intermédiaire d'une gaine de combustible nucléaire à trois couches telle que décrite ci-après.

En effet, dans une telle gaine, chaque couche possède ses caractéristiques mécaniques propres. Or, au sein d'un réacteur nucléaire, dans des conditions d'exploitation (comprenant une irradiation, de nombreuses montées et descentes en température, ...) voire dans des conditions accidentelles, chaque couche d'une telle gaine exprime un comportement mécanique qui lui est propre et qui peut être incompatible avec celui des autres couches.

Le fait qu'il existe une continuité remarquable et innattendue de la résistance mécanique entre les différentes couches, minimise par exemple les risques de « délaminage » et/ou d'endommagement localisé à l'interface entre les couches, qui peut mener à une fissuration et éventuellement peut aboutir à la destruction de la gaine de combustible nucléaire, ce qui est inacceptable en termes de sûreté lors du fonctionnement en milieu nucléaire.

Avantageusement, l'alliage de zirconium selon l'invention comprenant en poids de 4 à 8 % d'erbium présente un ensemble de propriétés qui le rendent particulièrement adapté à son utilisation en tant que matériau constitutif d'une couche de gaine de combustible nucléaire, puisqu'il est suffisamment i) laminable et ductile pour autoriser la mise en forme de pièces de formes variées, ii) résistant mécaniquement pour supporter les contraintes rencontrées au sein d'une telle gaine, en présentant lorsqu'il constitue la couche intermédiaire d'une gaine de combustible nucléaire une continuité de cette résistance mécanique vis-à-vis des couches externe et interne constituées d'alliage de zirconium éprouvé industriellement, et iii) suffisamment riche en erbium pour respecter un empoisonnement global pouvant atteindre 3 % en poids d'erbium sur l'ensemble de la gaine.

### 2 - Fabrication par un procédé de métallurgie des poudres d'un tube et d'une gaine de structure composite selon l'invention.

Le procédé de métallurgie des poudres selon l'invention est particulièrement avantageux pour certaines applications (en particulier lorsque des pièces de géométrie relativement complexes sont recherchées), ou lorsque l'on cherche à limiter la quantité de matériau mise en oeuvre et/ou la pollution de l'outillage par exemple lors d'un filage ou un laminage, puisqu'un tel procédé ne nécessite pas de mise en forme par enlèvement de matière comme cela est généralement le cas avec un procédé de fusion.

De façon préférentielle, une pièce selon l'invention est une gaine de combustible nucléaire de structure composite qui comprend successivement trois couches :
- une couche externe constituée de métal ou d'alliage ;
- une couche intermédiaire constituée de l'alliage de zirconium selon l'invention :
- une couche interne constituée de métal ou d'alliage.

De façon avantageuse, cette structure permet de faire en sorte que le métal ou l'alliage constitutif de la couche externe et/ou interne est différent du métal ou de l'alliage constitutif de la couche intermédiaire, et qu'il est optimisé pour avoir des propriétés particulières (notamment la résistance à la corrosion, la stabilité sous irradiation, la tenue mécanique) et les propriétés nécessaires dans le cadre de haut taux de combustion d'un réacteur nucléaire, typiquement de l'ordre de 100-120 GWj/tU (milliard de watts jour par tonne d'uranium). Ainsi, les problèmes précités de corrosion en milieu oxydant d'un alliage de zirconium comprenant de l'erbium sont notamment résolus par une telle structure dans laquelle la couche intermédiaire est protégée vis à vis de la corrosion par la couche externe et/ou la couche interne.

Dès lors, l'alliage de zirconium selon l'invention constitutif de la couche intermédiaire peut être « faiblement allié », à savoir qu'il comporte peu ou pas d'additifs lui conférant par exemple des propriétés d'anticorrosion. Ainsi, préférentiellement, l'alliage de zirconium selon l'invention contient peu d'additifs, à savoir qu'il comprend de 0,005 à 1 % en poids des éléments supplémentaires.

Il découle dès lors de cette souplesse dans le choix de la composition de la couche interne ou externe, que :
- soit le métal ou l'alliage constitutif de la couche externe est identique au métal ou à l'alliage constitutif de la couche interne, préférentiellement un tel alliage est l'alliage de zirconium M5^{®} (alliage de zirconium à 1 % en poids de niobium) qui est bien connu de l'homme du métier pour avoir prouvé ses qualités de résistance à la corrosion (notamment par oxydation-hydruration), de stabilité sous irradiation (tel que l'absence de gonflement/grandissement) et de bonne tenue mécanique en tant que matériau de gaine de combustible nucléaire) ;
- soit le métal ou l'alliage constitutif de la couche externe est différent du métal ou de l'alliage constitutif de la couche interne, chaque composition de ces couches pouvant être optimisés en vue d'obtenir une ou plusieurs propriétés qui lui sont propres. Ainsi, de façon avantageuse, la couche externe est constituée de l'alliage M5^{®} et la couche interne est constituée d'un alliage de zirconium apte à résister à la corrosion interne sous tension.

Par ailleurs, quelque soit le choix de la composition de la couche interne ou externe, de façon avantageuse, 'en outre l'alliage de zirconium constitutif de la couche intermédiaire est de composition similaire (ou intermédiaire entre les compositions chimiques respectives des couches interne et externe au cas où les alliages constitutifs de ces couches sont différents), si ce n'est qu'il comprend de l'erbium, à l'alliage de la couche externe ou de la couche interne, permettant ainsi, entre ces couches et la couche intermédiaire, une bonne continuité métallurgique garante de propriétés mécaniques optimales.

La fabrication à l'aide d'un procédé de métallurgie des poudres d'une gaine de combustible nucléaire à trois couches selon l'invention est illustrée ci-après, ainsi qu'à des fins comparatives la fabrication d'une gaine à deux couches.

Un tel procédé de métallurgie des poudres dans lequel une pièce est mise en forme par « pressage » présente un avantage particulier lorsqu'il s'agit de réaliser une pièce de géométrie plus complexe qu'une plaque, comme par exemple un tube.

En outre, un tel procédé permet de mélanger des constituants chimiques non miscibles et qui ne pourraient pas l'être par des procédés plus conventionnels de type fusion à l'arc ou à l'électrode consommable. Ceci trouve un intérêt particulier, par exemple, pour réaliser des pièces de type céramique-métal ou céramique-alliage.

Préférentiellement, selon l'invention, l'étape de frittage du procédé de métallurgie des poudres pour la fabrication et éventuellement la mise en forme de l'alliage de zirconium est précédée par les étapes suivantes réalisées sous atmosphère inerte ou sous vide :
a) un remplissage d'un moule avec une poudre homogène comprenant le zirconium, l'erbium et les éléments supplémentaires, suivi éventuellement d'une pré-compaction de la poudre ; puis,
b) une compaction à froid de la poudre afin d'obtenir une ébauche compacte moulée ; puis,
c) une extraction de l'ébauche, suivie éventuellement d'une étape d'usinage.

### 2.1 - Fabrication par un procédé de métallurgie des poudres de la couche intermédiaire de la gaine selon l'invention.

Une couche en alliage de zirconium « Zr-D » à 4 % ou 5 % en poids d'erbium a été obtenue par métallurgie des poudres.

L'erbium utilisé se présentait sous la forme de copeaux longs ayant une surface striée et cisaillée, de faible épaisseur et de longueur maximale pouvant atteindre 600 µm.

L'alliage de zirconium était quant à lui constitué d'alliage de zirconium « Zr-D » se présentant sous forme d'une poudre obtenue par atomisation et constituée de particules sphériques (diamètre moyen d'environ 100 µm) à surface lisse. La teneur en oxygène de cette poudre était d'environ 1450 ppm en pourcentage en poids.

Avant de le mélanger à l'alliage de zirconium « Zr-D », l'erbium a été broyé sous argon dans un broyeur planétaire à l'intérieur d'une jarre en carbure de tungstène pendant 15 minutes. Ensuite, un tamisage a été réalisé à d < 315 µm, sous atmosphère d'argon, en boite à gant.

Le mélange de l'alliage de zirconium « Zr-D » avec 4 ou 5 % en poids d'erbium a été préparé sous boite à gant. Le poids total du mélange était de ~ 1300 grammes pour le mélange à 4 % en poids d'erbium (utilisé pour réaliser la couche interne d'une gaine de combustible nucléaire à deux couches) et de ~ 1400 grammes pour le second mélange à 5 % en poids d'erbium (utilisé pour réaliser la couche intermédiaire d'une gaine de combustible nucléaire à trois couches).

Les mélanges ainsi obtenus de poudres élémentaires de l'alliage de zirconium et de l'erbium ont ensuite été compactés isostatiquement à froid (CIF) sous 13000 bars à l'aide d'une presse à filer. Les compactés obtenus ont été usinés afin d'obtenir un cylindre de diamètre de 47 mm et de longueur de 85 mm qui a été gainé dans une enveloppe en titane sous vide (dégazage par un queusot) pour subir un cycle de consolidation par compaction isostatique à chaud (CIC) qui s'est effectué pendant 2 heures sous argon à 1000°C et 1500 bars.

Le cylindre obtenu a ensuite été usiné (forage et reprise du diamètre externe) afin d'obtenir un cylindre creux. Les dimensions de ce cylindre étaient respectivement :
- couche intermédiaire d'une gaine à trois couches : diamètre externe de 41,5 mm et diamètre interne de 33 mm
- couche interne d'une gaine à deux couches : diamètre externe de 46 mm et diamètre interne de 37,5 mm

### 2.2 - Réalisation de gaines de combustible nucléaire comprenant une couche intermédiaire fabriquée par un procédé de métallurgie des poudres.

Afin de réaliser une gaine de combustible nucléaire à trois couches et à deux couches, une ébauche composite pour le filage est réalisée pour chacune de ces deux gaines. Elle se compose des éléments suivants :
- Une « enveloppe » dans laquelle est insérée l'ébauche de la gaine de combustible nucléaire. Elle est constituée d'un gainage extérieur, d'un gainage intérieur, et d'un bouchon, tous trois réalisés en alliage de cuivre au chrome afin d'assurer à la fois cohésion, homogénéité thermique et lubrification à la température de filage.
- Pour la virole interne (absente lorsqu'une gaine de combustible nucléaire à deux couches est fabriquée) et la virole externe, qui constitueront respectivement la couche interne de la gaine à trois couches et la couche externe des gaines à deux ou trois couches, on utilise un alliage de zirconium M5^{®} approvisionné auprès de la société CEZUS sous forme de lingot de diamètre 120 mm. Ce lingot est mis sous forme d'un cylindre de diamètre 73 mm par filage à 700°C. Après usinage, on obtient une virole sous la forme d'une ébauche cylindrique creuse de 170 mm de longueur, de diamètre externe de 66 mm et de diamètre interne de 26 mm.
- Pour la couche interne (gaine à deux couches) ou la couche intermédiaire (gaine à trois couches) en alliage de zirconium « Zr-D » comprenant de l'erbium à respectivement 4 % ou 5 % en poids d'erbium, on utilise les cylindres creux obtenus à l'issue de l'exemple précédent.

Les caractéristiques dimensionnelles sont calculées de façon à obtenir une ébauche de gaine de combustible nucléaire de diamètre externe de 18 mm et diamètre interne de 14 mm, après l'opération de cofilage (ces diamètres correspondent à un tube ébauche standard pour la fabrication des gaines de combustible nucléaire d'un réacteur REP).

Le cofilage sur aiguille de l'ébauche composite a été réalisé à une température de 700°C, après que l'ébauche ait été préchauffée une heure à cette même température.

Un conteneur de diamètre 73 mm, une filière en acier de diamètre 19 mm et une aiguille de filage en acier de diamètre 13,5 mm ont été utilisés. Un rapport de filage élevé a été mis en oeuvre (R = 29), ce qui a permis l'obtention d'un tube de grande longueur ( > 3000 mm), de diamètre externe de 19 mm et de diamètre interne de 13,8 mm.

Le tube filé ainsi obtenu a ensuite été découpé en trois tronçons de longueur unitaire d'environ 1000 mm. Chaque tronçon a alors subit un décapage chimique dans un bain acide (HNO₃ à 50 %) afin d'éliminer le gainage extérieur et le gainage intérieur de cuivre.

Après cette opération, les trois tubes obtenus ont été redressés, rodés et tournés. Les spécifications dimensionnelles étaient notamment une épaisseur constante à ± 0,1 mm, une excentricité maximale de 0,05 mm et une rugosité interne et externe de Ra < 0,8 µm.

La mise en forme finale a consisté à réduire par cinq passes de laminage à froid à l'aide d'un laminoir à galets non spécifique dit « HPTR » (auquel on peut substituer un laminage par « pas de pèlerin » connu de l'homme du métier et a priori plus favorable vis-à-vis des propriétés mécaniques finales de l'alliage de zirconium de l'invention) les diamètres et l'épaisseur des tubes pour atteindre les dimensions standard des gaines de combustible nucléaire (diamètre externe = 9,50 mm ; diamètre interne = 8,35 mm ; épaisseur = 575 µm). Un traitement thermique de recristallisation (580°C pendant 5 heures) sous vide primaire a été effectué entre chaque passe de laminage pour adoucir le matériau et limiter ainsi les risques d'endommagement lié au cumul de déformation plastique (écrouissage).

L'étape ultime de cette fabrication a consisté à réaliser sur chaque tube un traitement thermique final sous vide (585°C pendant 5 heures).

A l'issue de l'ensemble de ce procédé, on obtient entre 3 et 4 m répartis en trois tronçons de tube prototype de gaine de géométrie REP, d'épaisseur d'environ 600 µm.

La couche externe en alliage de zirconium M5^{®} (gaine à deux ou trois couches) présente une épaisseur d'environ 400 µm et assure l'essentiel des propriétés mécaniques de l'ensemble et de la tenue à la corrosion externe en conditions d'exploitation (et éventuellement accidentelles).

Pour la gaine à trois couches, la couche intermédiaire (alliage de zirconium « Zr-D » comprenant 5 % en poids d'erbium élaboré par le procédé de métallurgie des poudres) a une épaisseur de 100 µm environ. La couche interne a quant à elle une épaisseur de 100 µm et a été réalisée en alliage de zirconium M5^{®}, sachant qu'un autre alliage de zirconium peut convenir tel un alliage couramment utilisé comme matériau de la couche interne de la gaine de combustible nucléaire pour les REB et spécifiquement optimisé pour la résistance à la corrosion interne sous tension (éventuellement assistée par l'iode), phénomène potentiellement fragilisant intervenant lors des interactions pastille-gaine de combustible nucléaire (IPG).

Ainsi, préférentiellement, la gaine à trois couches selon l'invention est telle que :
- la couche externe a une épaisseur de 350 à 450 micromètres, préférentiellement 400 micromètres ;
- la couche intermédiaire a une épaisseur de 50 à 150 micromètres, préférentiellement 100 micromètres ;
- la couche interne a une épaisseur de 50 à 150 micromètres, préférentiellement 100 micromètres.

Ces épaisseurs spécifiques de couches permettent avantageusement d'avoir une couche externe dont l'épaisseur est importante par rapport aux couches intermédiaire et interne (ce qui confère une protection optimale par rapport à l'environnement extérieur à la gaine de combustible nucléaire) tout en ayant une épaisseur pour la couche intermédiaire telle que la quantité en erbium est suffisante pour augmenter la longueur des cycles de combustion d'un réacteur nucléaire. Ainsi, en pratique, une couche intermédiaire de 50 à 150 micromètres d'épaisseur constituée d'alliage de zirconium comprenant environ 12 % en poids d'erbium permet de respecter un empoisonnement global d'environ 3 % en poids d'erbium naturel pour la gaine de combustible nucléaire, ce qui justifie par ailleurs la limite haute de la teneur de 3 à 12 % (préférentiellement 4 à 10 %) en poids d'erbium pour l'alliage de zirconium de l'invention, en particulier lorsque la gaine se présente sous forme de tube.

Pour atteindre un empoisonnement global compris entre 0,8 et 3 %, la gaine de combustible nucléaire à trois couches dans laquelle la couche intermédiaire est constituée de l'alliage de zirconium selon l'invention comprenant entre 4 et 8 % en poids d'erbium, est préférentiellement telle que :
- la couche externe a une épaisseur de 150 à 450 micromètres, préférentiellement 375 mïcromètres ;
- la couche intermédiaire a une épaisseur de 50 à 250 micromètres, préférentiellement 100 micromètres ;
- la couche interne a une épaisseur de 50 à 150 micromètres, préférentiellement 100 micromètres.

La figure 4 illustre la structure métallurgique obtenue sur le produit final. On peut observer une excellente continuité métallurgique entre les trois couches indexées sur la figure : couche A (couche externe en alliage de zirconium M5^{®}), couche B (couche intermédiaire d'alliage de zirconium « Zr-D » comprenant 5 % en poids d'erbium), couche C (couche interne en alliage de zirconium M5^{®}).

A titre de référence, des gaines de combustible nucléaire témoins à une seule couche constituée d'alliage M5^{®} (sans erbium) on été fabriquées selon le même processus.

### 2.3 - Caractéristiques mécaniques des gaines de combustible nucléaire comprenant une couche intermédiaire fabriquée par un procédé de métallurgie des poudres.

Les caractéristiques mécaniques usuelles obtenues en éclatement par pression interne à 350°C ont été mesurées sur les prototypes de gaines de combustible nucléaire REP à trois couches selon l'invention obtenues dans l'exemple précédent.

A titre comparatif, ces caractéristiques mécaniques ont également été mesurées sur des tubes témoins (c'est à dire des gaines monocouches) constitués d'alliage de zirconium M5^{®} sans erbium et sur les prototypes de gaines de combustible nucléaire REP à deux couches obtenus dans l'exemple précédent.

Après mise en forme à chaud puis à froid jusqu'à une géométrie de gaine de combustible nucléaire d'un réacteur nucléaire REP, toutes ces gaines de combustible nucléaire et ces tubes réalisés selon la même gamme de fabrication présentaient une longueur de 1000 µm, un diamètre externe de 9,50 mm ; un diamètre interne de 8,35 mm et une épaisseur de 575 µm.

Le tableau 2 présente les résultats des tests mécaniques réalisés. Les abréviations utilisées ont la même signification que dans le tableau 1. Toutefois, les caractéristiques mécaniques présentées dans ces deux tableaux ne peuvent pas être directement comparées, de part notamment la géométrie différente des pièces sur lesquels ces tests mécaniques ont été effectués et le mode sollicitation (pression interne au lieu de traction).

On peut observer que les résistances mécaniques des différents prototypes sont comparables, avec des valeurs toutefois un peu plus faibles pour le prototype à deux couches. Par contre, on constate une ductilité très faible pour le prototype à deux couches, alors que le prototype à trois couches, bien qu'ayant un allongement total à rupture inférieur au tube en alliage de zirconium M5^{®} témoin, présente des valeurs de ductilité relativement correctes comparativement à la référence, en particulier au niveau de l'allongement réparti - paramètre important et pertinent en pratique, vis-à-vis du dimensionnement des structures.

**TABLEAU 2**

| Géométrie tubulaire - épaisseur totale - 575 µm | Rp 0,2% (Mpa) | Rm (Mpa) | Ar (%) | At (%) |
|---|---|---|---|---|
| M5^{®} témoin sans erbium - échantillon n°1 | 211 | 276 | 8,2 | 36,2 |
| M5^{®} témoin sans erbium - échantillon n°2 | 217 | 279 | 5,5 | 25,6 |
| Prototype à 2 couches (M5^{®}/Zr-D 4% erbium)- échantillon n°1 | 195 | 229 | 1,4 | 3,8 |
| Prototype à 2 couches (M5^{®}/Zr-D 4% erbium - échantillon n°2 | 219 | 241 | 1 | 3,9 |
| Prototype à 3 couches (M5^{®}/Zr-D 5% erbium/M5^{®})- échantillon n°1 | 206 | 264 | 5 | 12,2 |
| Prototype à 3 couches (M5^{®}/Zr-D 5% erbium/M5^{®})- échantillon n°2 | 198 | 261 | 6,3 | 12,2 |

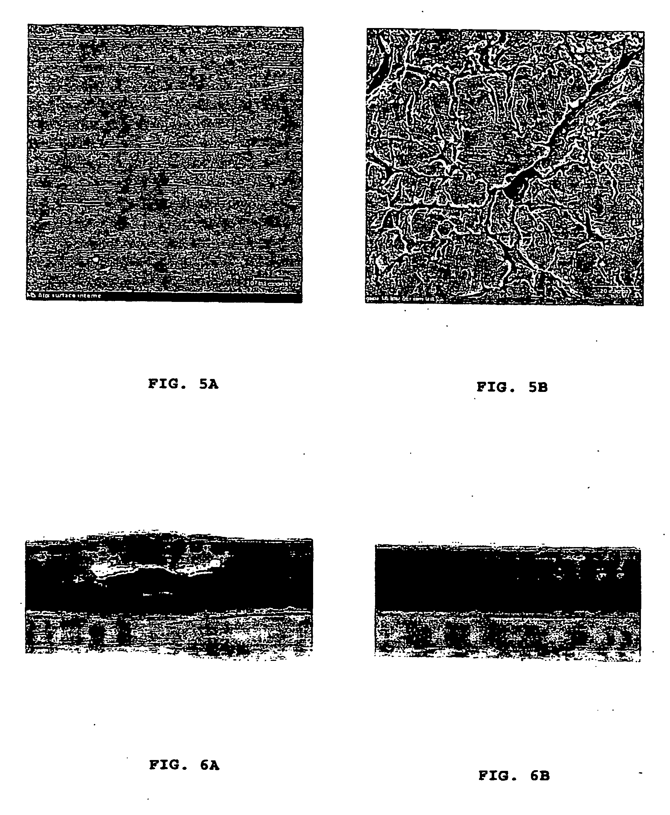

Ce comportement mécanique d'une gaine de combustible nucléaire à deux couches est illustrée par la Figure 5A (micrographie de la surface interne d'une gaine monocouche de combustible nucléaire témoin constituée d'alliage de zirconium M5^{®} sans erbium) qui est à comparer à la Figure 5B (micrographie de la surface interne de la gaine à deux couches obtenue à l'exemple précédent, à savoir une couche externe en alliage de zirconium M5^{®} et une couche interne d'alliage de zirconium faiblement allié (« Zr-D ») comprenant 4 % en poids d'erbium).

Il apparaît nettement que l'état de la surface interne de la gaine comprenant de l'erbium est fortement dégradé.

Ceci est dû notamment à la présence de précipités d'oxydes d'erbium plus ou moins grossiers générés dans la couche interne par le procédé de métallurgie des poudres qui gagne à être optimisé - ou remplacé avantageusement par le procédé de fusion décrit dans les exemples précédents pour des plaques - pour limiter la croissance de ces oxydes.

Cette présence de précipités s'avère néfaste vis-à-vis de la ductilité résiduelle de ces gaines et peut provoquer un endommagement important de la face interne de la gaine à deux couches (amorce de fissure voire fissuration) ainsi que l'absence de ballonnement significatif suivi d'une rupture lors des essais d'éclatement précités.

Ceci apparaît dans les Figures 6A et 6B qui illustrent l'aspect macroscopique des gaines de combustible nucléaires à une et deux couches dont la surface interne est représentée respectivement sur les Figures 5A et 5B. Bien que ces gaines aient été fabriqués rigoureusement selon la même gamme de fabrication, seule la gaine monocouche de la Figure 6A présente après essais d'éclatement en pression interne à 350°C une rupture classique et caractéristique d'un alliage sans précipités d'oxydes, à savoir avec une ductilité apparente significative (ballonnement avant rupture).

La gaine de combustible nucléaire à trois couches ne présente quant à elle pas les mêmes déficiences en terme mécanique, puisque la couche intermédiaire constituée d'alliage de zirconium comprenant de l'erbium est protégée par les couches externe et interne de la gaine de combustible nucléaire. Cette couche intermédiaire qui seule comprend de l'erbium ne peut donc favoriser l'apparition de précipités d'oxyde d'erbium affleurant en surface, défavorables vis-à-vis de la ductilité de l'ensemble de la gaine, car constituant des sites potentiels d'amorçage précoce de fissure, par exemple lors des opérations de mise en forme (laminage).

### 2.4 - Propriétés vis-à-vis de l'hydruration d'une gaine de combustible nucléaire à trois couches.

L'hydruration est un phénomène qui se produit au sein des gaines de combustible nucléaire en conditions normales d'exploitation du réacteur nucléaire ou en conditions accidentelles.

Elle résulte de la succession des réactions (1) et (2) suivantes : le zirconium contenu dans la gaine de combustible nucléaire est oxydé par l'eau pressurisée ou la vapeur d'eau selon la réaction

(1) Zr + 2H_{2O} -> ZrO₂ + 2H₂

, puis l'hydrogène ainsi libéré diffuse dans les alliages de zirconium compris dans la gaine (au sein de la structure majoritairement zirconium-alpha de ces alliages) et peut former un hydrure avec le zirconium non encore oxydé de la gaine selon la réaction

(2) Zr + xH -> ZrHₓ.

L'indice « x » indique que des hydrures de stoechiométrie variable peuvent être formés, cet indice étant en particulier égal à 2.

Selon la teneur globale en hydrogène et/ou la température, tout ou partie de l'hydrogène va précipiter, le reste restant en solution solide (en insertion dans le réseau cristallin zirconium-alpha).

Par exemple, à 20°C, la quasi-totalité de l'hydrogène est précipité sous forme d'hydrures alors que leur dissolution peut être totale à haute température (typiquement supérieure à 600°C).

L'hydrogène en solution solide, mais surtout sous forme de précipité d'hydrure de zirconium, a pour inconvénient de diminuer la ductilité des alliages de zirconium, et donc de fragiliser la gaine, notamment à basse température. Cette fragilisation est d'autant plus à craindre lorsque l'on cherche à atteindre les forts taux de combustion précités car, à ces taux, on constate un accroissement de la proportion de zirconium oxydé selon la réaction (1) et donc de la quantité d'hydrures formés selon la réaction (2). Elle conduit alors le plus souvent à la corrosion des alliages industriels usuels à des niveaux rédhibitoires vis-à-vis des critères de sûreté et d'intégrité de la gaine et pose des problèmes vis-à-vis des conditions de transport et d'entreposage post-service.

Afin d'étudier le comportement de l'alliage de zirconium selon l'invention vis-à-vis de l'hydruration, une expérience a été menée sur une gaine de combustible nucléaire à trois couches selon l'invention et telle qu'obtenue dans les exemples précédents. La couche intermédiaire de cette gaine est constituée d'alliage de zirconium faiblement allié (« Zr-D ») comprenant en poids environ 5 % d'erbium.

L'expérience a consisté à hydrurer l'ensemble de la gaine de combustible nucléaire à trois couches en y incorporant par chargement cathodique de l'hydrogène à une teneur globale de 400 à 450 ppm en poids, puis à soumettre celle-ci à un traitement thermique de 24h à 430 °C afin de simuler la dissolution à haute température et la précipitation à basse température des hydrures en conditions d'exploitation d'un réacteur nucléaire et/ou lors de l'entreposage ou du transport post-service.

Des coupes transversales de la gaine de combustible nucléaire ont été réalisées, puis soumises à une attaque spécifique pour révéler les précipités d'hydrure de zirconium avant d'être examinées par micrographie optique.

A titre comparatif, la même expérience a été réalisée sur une gaine de combustible nucléaire monocouche constituée d'alliage de zirconium M5^{®} sans erbium et hydrurée selon le même protocole (chargement cathodique) jusqu'à une teneur globale en hydrogène comparable.

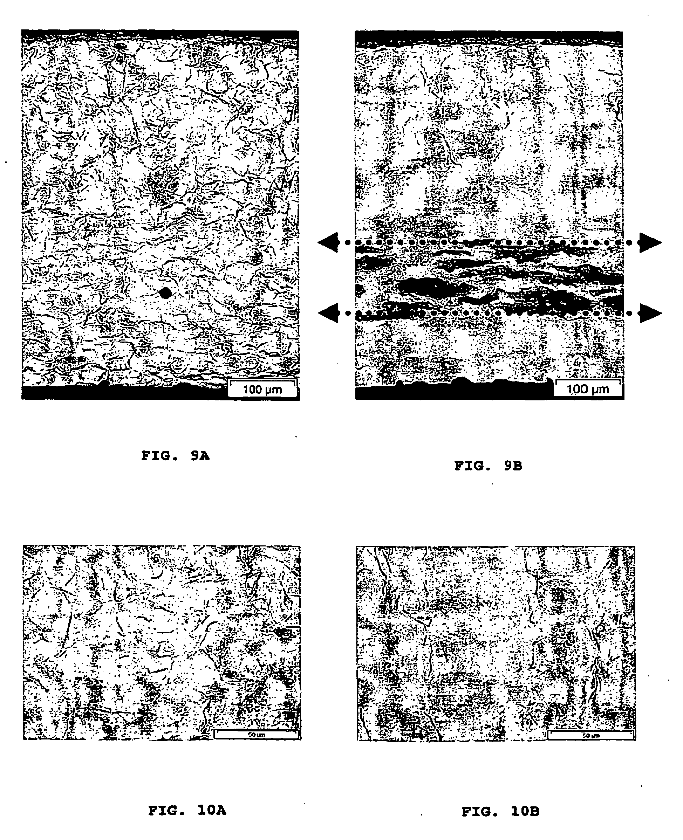

Les micrographies optiques obtenues sont représentées sur les Figures 9A et 10A (gaine monocouche) ainsi que 9B et 10B (gaine à trois couches). Les précipités d'hydrure de zirconium y apparaissent sous forme de fines plaquettes orientées plus ou moins aléatoirement de couleur gris foncé.

Il ressort nettement de ces micrographies que malgré une teneur globale en hydrogène identique, la quantité d'hydrogène présente sous forme de précipités d'hydrure de zirconium au sein de la gaine à trois couches est bien plus faible - voire quasi-inexistante - dans les couches externe et interne en alliage M5^{®} (qui représentent près de 80 % de l'épaisseur totale de la gaine à trois couches) que dans la gaine monocouche. La couche intermédiaire constituée d'alliage de zirconium comprenant de l'erbium se comporte donc comme si elle « pompait » de l'hydrogène, jouant ainsi le rôle d'une « couche sacrificielle » au sein de la gaine de combustible nucléaire à trois couches.

En pratique, un tel comportement est très avantageux puisque, pour une teneur globale en hydrogène donnée dans la gaine de combustible nucléaire (c'est à dire pour un taux de combustion donné), la diminution importante (voire la disparition) des précipités d'hydrure dans les couches externe et interne de cette gaine à trois couches conduit à améliorer significativement la ductilité résiduelle de cette gaine par rapport à une gaine monocouche, et ainsi à limiter voire empêcher la dégradation de la structure de la gaine et les éventuels problèmes de formation de « sur-concentration locale » d'hydrures associée à une desquamation et/ou une fissuration locale de l'oxyde.

La présence de la couche intermédiaire comprenant de l'erbium conduit donc à un gain significatif sur le comportement du gainage (irradié-oxydé-hydruré) aussi bien vis-à-vis des conditions de fonctionnement nominales qu'accidentelles d'un réacteur nucléaire, ainsi que lors des opérations de manutention, de transport et de stockage post-service.

De façon encore plus avantageuse, les micrographies font apparaître une diminution significative de la quantité de précipités d'hydrure de zirconium jusque dans les zones les plus éloignées de la couche intermédiaire, c'est à dire les zones proches des surfaces externe et interne de la gaine de combustible nucléaire à trois couches. La couche intermédiaire permet donc un « pompage » de l'hydrogène à grande distance.

Or, lors de l'exploitation d'un réacteur nucléaire, les hydrures précipitent préférentiellement dans la zone la plus « froide » de la gaine de combustible nucléaire (à savoir la zone la plus éloignée du combustible nucléaire), ce qui conduit à l'existence d'une concentration importante de ces précipités juste sous la couche d'oxyde qui est formée habituellement en surface de la gaine (zone appelée usuellement « RIM d'hydrures massifs »).

Cette zone déterminée est donc tout particulièrement fragile car elle peut contenir localement plusieurs milliers de ppm en poids d'hydrogène. En outre, du fait de la différence de volume entre l'oxyde et l'alliage de zirconium, cette zone particulière (l'alliage juste sous l'oxyde) se trouve principalement en tension, d'où la possibilité d'endommagement , d'amorçage et de propagation de fissures dans cette zone.

Face à diverses sollicitations, la gaine de combustible nucléaire à trois couches selon l'invention se comporte donc mécaniquement de manière plus favorable qu'une gaine monocouche, puisque la zone fragilisée précitée est déplacée vers l'intérieur de la gaine (sans toutefois aller jusqu'à tangenter la surface interne de la gaine), pour retarder voire éviter l'amorçage et la propagation précoces d'une fissure depuis la surface externe de la gaine (plus exactement depuis l'interface alliage de zirconium-oxyde externe de la gaine) qui peut conduire à une perte d'étanchéité du gainage.

De même, en entreposage et/ou lors du transport post-service, la puissance résiduelle dans le combustible conduit à chauffer la gaine de combustible nucléaire à des températures pouvant dépasser 400°C. Ceci conduit à une dissolution totale ou partielle des hydrures. Lors d'un refroidissement ultérieur, les hydrures peuvent re-précipiter sous contrainte (telle qu'une pression interne due au gaz de pressurisation initiale et/ou aux gaz de fission, voire à des chocs ou vibrations lors du transport), et donc se repositionner de manière défavorable (par exemple dans la couche externe de la gaine) vis-à-vis de la ductilité et/ou de la ténacité résiduelle de la gaine irradiée. Dans ce dernier cas, l'existence d'une couche intermédiaire « pompant » préférentiellement l'hydrogène est de nouveau très favorable.

Enfin, de manière générale en scénario hypothétique incidentel ou accidentel conduisant à une incursion en température du gainage à une température supérieure à sa température maximale en service (environ 360°C), le « pompage » préférentiel de l'hydrogène par la couche intermédiaire « sacrificielle » d'une gaine de combustible nucléaire à trois couches selon l'invention conduit à dégager des marges importantes vis-à-vis de la sûreté.

Afin d'obtenir l'effet précité de « pompage » de l'hydrogène, l'alliage de zirconium de l'invention (constituant éventuellement la couche intermédiaire d'une gaine de combustible nucléaire à trois couches selon l'invention) peut contenir :
- en substitution en tout ou partie ou en complément à l'erbium, au moins un élément choisi parmi Dy, Gd, Sm, Eu ;
- uniquement en complément à l'erbium, au moins un élément choisi parmi Ba, Ca, Ce, Ho, La, Li, Lu, Nd, Pr, Pu, Sc, Sr, Tb, Tm, Y, Yb ; un tel élément ayant la faculté de former un ou des hydrures plus stables que les hydrures de zirconium, aux dépens donc des hydrures de zirconium.

### 3 - Exemples comparatifs en neutronique.

D'après des évaluations neutroniques réalisées par les inventeurs, la teneur en erbium dans l'ensemble de la gaine de combustible nucléaire doit être préférentiellement de 0,8 à 3 % en poids pour atteindre un empoisonnement conforme au cahier des charges fixé pour un poison neutronique consommable utilisé à un haut taux. de combustion. Afin d'atteindre ces spécifications, l'homme du métier saura alors fixer la teneur en erbium dans la couche intermédiaire en fonction de l'épaisseur de cette dernière dans la gaine de combustible nucléaire.

L'intérêt au niveau de la neutronique d'introduire l'alliage de zirconium selon l'invention dans une gaine de combustible nucléaire a été démontrée dans les exemples comparatifs qui suivent et qui simulent à l'aide de codes de calcul propres aux inventeurs l'évolution de l'anti-réactivité (en pcm) en fonction du taux de combustion exprimé en MWj/t (millions de watts jour par tonne) après l'introduction de différents poisons neutroniques consommables.

Les empoisonnements suivants, calculés pour apporter la même efficacité initiale, ont été réalisés :
- un empoisonnement (1) de référence tel qu'utilisé industriellement apporté par 16 crayons, introduits dans un assemblage, contenant en tant que combustible nucléaire de l'oxyde d'uranium gadolinié à 8 % en poids de gadolinium ;
- un empoisonnement (2) avec 13,8 % en poids d'erbium naturel introduit dans la couche interne en alliage de zirconium d'une gaine de combustible nucléaire à deux couches, cette couche interne représentant un sixième du volume de la gaine de combustible nucléaire, soit un empoisonnement global de la gaine de - 2,3 % en poids) ;
- un empoisonnement (3) similaire à l'empoisonnement (2) si ce n'est que l'alliage de zirconium comprend de l'erbium naturel et son isotope ¹⁶⁷Er.

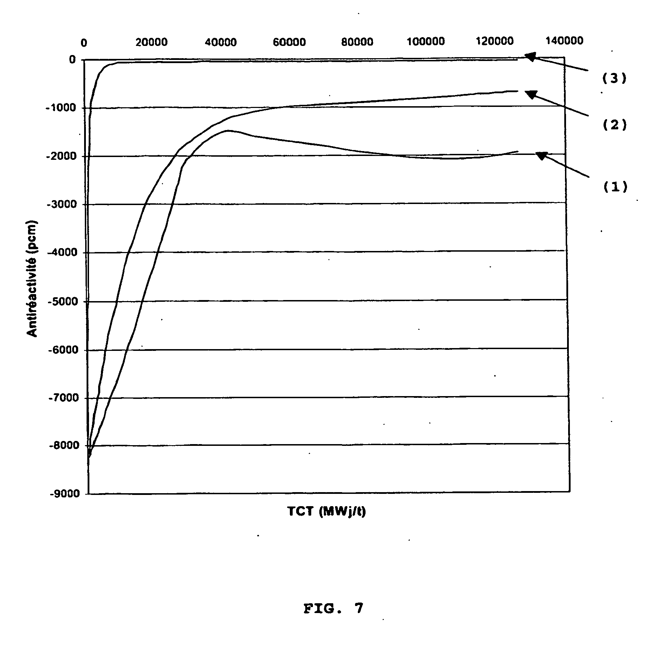

Les résultats obtenus sont illustrés par la Figure 7. Il apparaît que l'empoisonnement de référence (1) a une cinétique d'usure beaucoup trop rapide.

Par contre l'intérêt d'introduire de l'erbium dans les gaines de combustible nucléaire selon l'empoisonnement (2) est démontré et la pénalité résiduelle de l'erbium est même plus faible que celle l'empoisonnement de référence (1).

Le tableau 3 ci-dessous présente le gain sur la pénalité résiduelle selon l'empoisonnement considéré pour une même efficacité initiale.

**TABLEAU 3**

| Cas étudié | Gain sur la pénalité résiduelle (%) |
|---|---|
| Empoisonnement (1) de référence par crayons de gadolinium | - |
| Empoisonnement (2) par erbium naturel dans les gaines de combustible nucléaire | - 21 % |
| Empoisonnement (3) par erbium enrichi en ¹⁶⁷Er dans les gaines de combustible nucléaire | - 42 % |

On voit que la pénalité résiduelle peut encore être réduite en introduisant dans les gaines de combustible nucléaire de l'erbium enrichi en isotope absorbant ¹⁶⁷Er et que l'on peut ainsi s'attendre à une légère augmentation de la longueur de cycle grâce à ce mode d'empoisonnement. Un comportement neutronique similaire est attendu pour une gaine de combustible nucléaire à trois couches selon l'invention.

Préférentiellement, l'alliage de zirconium selon l'invention est donc tel que l'erbium est choisi parmi l'erbium naturel, l'isotope ¹⁶⁷Er et leurs mélanges.

Des résultats similaires à ceux exposés dans cet exemple seraient obtenu avec l'empoisonnement (2) dans une gaine de combustible nucléaire à trois couches.

### 4 - Calculs coeurs de réacteurs nucléaires.

Des calculs coeurs réalisés sur la gestion de référence IN-OUT 100 % UO₂ pour un réacteur EPR ont également démontré l'intérêt d'empoisonner les gaines de combustible nucléaire par l'erbium. Dans cette gestion, les assemblages sont enrichis à 4,9 % en poids en ²³⁵U. C'est une gestion par quart de coeur avec une longueur de campagne de 18 mois, le taux de combustion moyen atteint est de 60 GWj/t.

Deux modes d'empoisonnement de 145 assemblages du coeur ont été comparés pour cette gestion : l'empoisonnement de référence (1) par des crayons contenant de l'oxyde d'uranium gadolinié en tant que combustible et l'empoisonnement (2) par introduction d'erbium dans la gaine de combustible nucléaire (si ce n'est que dans ce cas, il s'agit d'un empoisonnement global de 1,3 % en poids (et non 2,3 % en poids) afin que l'efficacité initiale apportée par l'erbium soit la même que celle apportée par le gadolinium).

Les résultats de cette étude sont synthétisés dans le tableau 4 qui donne les valeurs des coefficients de réactivité dans le coeur en début de cycle (ou vie) de combustion (Xénon nul) et en fin de cycle de combustion.

Ils ont montré qu'il était possible d'améliorer sur cette gestion les pics de puissance dans le coeur et, grâce au mode d'empoisonnement (2), de diminuer le rapport de puissance entre le crayon le plus chaud du coeur et le crayon moyen (FΔH) d'environ 3 % par rapport à l'empoisonnement (1) de référence.

**TABLEAU 4**

| | Gestion de référence empoisonnée par des crayons de gadolinium. (1) | | Gestion empoisonnée par de l'erbium naturel dans les gaines. (2) | |
|---|---|---|---|---|
| | Début de vie Xe nul | Fin de vie | Début de vie Xe nul | Fin de vie |
| Efficacité du bore (pcm/ppm) | -6,33 | -7,8 | -6,30 | -7,75 |
| Coefficient Doppler (pcm/°C) | -2,46 | -2,64 | -2,46 | -2,63 |
| Coefficient de température modérateur (pcm/°C) | -14,46 | -72,24 | -17,11 | -73,26 |

Par ailleurs, il est apparu que le coefficient de température modérateur était plus grand en valeur absolue lorsque les gestions étaient contrôlées par l'empoisonnement (2) plutôt que par l'empoisonnement (1) de référence. L'erbium a la particularité par rapport au gadolinium d'absorber aussi bien dans le domaine thermique qu'épithermique. Ainsi malgré une augmentation de la température modérateur qui engendre une diminution de la densité d'eau et donc un durcissement du spectre, le niveau d'absorption de l'empoisonnement (2) à l'erbium est plus important que celui de l'empoisonnement (1) de référence au gadolinium qui lui absorbe essentiellement dans le thermique.

L'utilisation de l'erbium plutôt que le gadolinium peut ainsi donner plus de souplesse en permettant l'introduction d'une plus forte concentration de bore en début de vie si cela s'avère nécessaire tout en respectant les contraintes de coefficient modérateur négatif. On peut par exemple abaisser légèrement la quantité d'erbium à introduire dans les gaines de combustible nucléaire en rajoutant du bore afin de conserver l'anti-réactivité initiale. On peut également profiter de la possibilité d'accroître la concentration initiale de bore pour augmenter l'enrichissement initial du combustible et donc le taux de combustion.

Des calculs ont également permis de mettre en évidence la plage de teneur en erbium optimale nécessaire pour contrôler la sur-réactivité initiale du combustible selon la gestion envisagée pour des REP du futur. Les résultats sont résumés dans le tableau 5 ci-dessous.

**TABLEAU 5**

| | Gestion 100 % UO₂ Référence EPR 4.9 % ²³⁵U | Gestion 100 % UO₂ Très Haut Burnup 10 % ²³⁵U |
|---|---|---|
| | TCT = 60 GWj/t Gestion par quart | TCT = 126.4 GWj/t Gestion par huitième |
| % en poids en Erbium naturel | ≈ 7,8 % | ≈ 18,6 % |

Il ressort clairement de la description ci-dessus, que l'alliage de zirconium selon l'invention possède à la fois :
- une ductilité qui permet la fabrication et la mise en forme d'une pièce de structure comprenant cet alliage,
- une microstructure homogène (absence de ségrégation entre le zirconium et l'erbium),
- une résistance mécanique et une ténacité garante de la bonne tenue mécanique de cette pièce, notamment aux températures de fonctionnement d'un réacteur nucléaire et/ou sous irradiation neutronique,
- une résistance accrue à la fragilisation potentielle due à l'hydruration en service et ou en conditions hypothétiques accidentelles, ainsi que lors du transport et/ou en entreposage post-service,
- une quantité suffisante d'erbium en tant que poison neutronique consommable afin que cet alliage puisse être incorporé dans une pièce telle qu'une gaine de combustible nucléaire qui permet de respecter l'empoisonnement recherché lors de sa mise en oeuvre à de forts taux de combustion (pouvant atteindre jusqu'à 120 GWj/t), et ce sans mettre en oeuvre de l'erbium se trouvant majoritairement sous la forme de l'isotope ¹⁶⁷Er.

### REFERENCES CITEES

[1] - FR 2789404
[2] - US 5,267,284
[3] - H.H. Klepfer, D.L. Douglass, J.S. Armijo, "Specific zirconium alloy design program", First Quaterly Progress Report, (Feb. - June 1962), GEAP-3979, US Atomic Energy Commission
[4] - US 5,241,571
[5] - US 5,267,290
[6] - US 6,426,476
[7] - « Binary Alloy Phase diagrams », 2nd Edition, Plus Updates, Copyright ASM International

## Revendications

1. Gaine de combustible nucléaire de structure composite comprenant successivement trois couches :
- une couche externe constituée de métal ou d'alliage ;
- une couche intermédiaire ;
- une couche interne constituée de métal ou d'alliage ;
ladite gaine étant **caractérisée en ce que** la couche intermédiaire est constituée d'un alliage de zirconium, comprenant de l'erbium, choisi parmi l'erbium naturel, l'isotope ¹⁶⁷Er et leurs mélanges, comme poison neutronique consommable,
ledit alliage de zirconium comprenant en poids :
- de 4 à 8 % dudit erbium;
- de 0,005 à 5 % d'éléments supplémentaires tels que des additifs et/ou des impuretés de fabrication ;
- et le reste de zirconium.

2. Gaine de combustible nucléaire selon la revendication 1, **caractérisée en ce que** ledit alliage de zirconium constitutif de la couche intermédiaire comprend en poids 5 à 7 % d'erbium.

3. Gaine de combustible nucléaire selon la revendication 2, **caractérisée en ce que** ledit alliage de zirconium constitutif de la couche intermédiaire comprend en poids environ 6 % d'erbium.

4. Gaine de combustible nucléaire selon l'une quelconque des revendications précédentes, **caractérisée en ce que** ledit alliage de zirconium comprend en poids de 0,005 à 1 % desdits éléments supplémentaires.

5. Gaine de combustible nucléaire selon l'une quelconque des revendications précédentes, **caractérisée en ce que** lesdits additifs comprennent en poids :
- moins de 3 % de niobium ;
- moins de 2 % d'étain ;
- moins de 0,6 % de nickel ;
- moins de 0,6 % de molybdéne ;
- moins de 0,6 % de cuivre ;
- moins de 0,6 % de fer ;
- moins de 0,2 % de chrome ;
- moins de 0,16 % d'oxygène en solution solide.

6. Gaine de combustible nucléaire selon l'une quelconque des revendications précédentes, **caractérisée en ce que** lesdites impuretés de fabrication comprennent en poids :
- moins de 120 ppm de silicium ;
- moins de 100 ppm de soufre ;
- moins de 20 ppm de chlore;
- moins de 10 ppm de phosphore ;
- moins de 10 ppm de bore ;
- moins de 10 ppm de calcium;
- moins de 50 ppm de chacun des éléments suivants :
lithium, fluor, métaux lourds.

7. Gaine de combustible nucléaire selon l'une quelconque des revendications précédentes, **caractérisée en ce que** l'erbium est réparti de manière homogène dans alliage de zirconium et/ou il n'existe pas de ségrégation de l'erbium sous forme de précipités d'erbium.

8. Gaine de combustible nucléaire selon l'une quelconque des revendications précédentes, **caractérisée en ce que** tout ou partie de 1'erbium se trouve dans l'alliage de zirconium sous forme de précipités d'oxydes complexes contenant en poids principalement de l'erbium.

9. Gaine de combustible nucléaire selon la revendication 8, **caractérisée en ce que** lesdits précipités sont de taille moyenne inférieure ou égale à un micromètre.

10. Gaine de combustible nucléaire selon la revendication 9, **caractérisée en ce que** lesdits précipités sont de taille moyenne inférieure ou égale à 500 nanomètres.

11. Gaine de combustible nucléaire selon la revendication 10, **caractérisée en ce que** lesdits précipités sont de taille moyenne comprise entre 5 nanomètres et 200 nanomètres.

12. Gaine de combustible nucléaire selon l'une quelconque des revendications 8 à 11, **caractérisée en ce que** lesdits précipités d'oxydes sont répartis de manière homogène dans l'alliage de zirconium.

13. Gaine de combustible nucléaire selon l'une quelconque des revendications précédentes, **caractérisée en ce que** le métal ou l'alliage constitutif de ladite couche externe est différent du métal ou de alliage constitutif de ladite couche interne.

14. Gaine de combustible nucléaire selon la revendication 13, **caractérisée en ce que** ladite couche externe est constituée de l'alliage M5 et ladite couche interne est constituée d'un alliage de zirconium apte à résister à la corrosion interne sous tension.

15. Gaine de combustible nucléaire selon l'une quelconque des revendications 1 à 12, **caractérisée en ce que** le métal ou l'alliage constitutif de ladite couche externe est identique au métal ou à l'alliage constitutif de ladite couche interne.

16. Gaine de combustible nucléaire selon l'une quelconque des revendications précédentes, **caractérisée en ce qu'**en outre l'alliage de zirconium constitutif de ladite couche intermédiaire est de composition similaire si ce n'est qu'il comprend de l'erbium, à l'alliage de ladite couche externe ou de ladite couche interne.

17. Gaine de combustible nucléaire selon l'une quelconque des revendications précédentes, **caractérisée en ce que** :
- ladite couche externe a une épaisseur de 350 à 450 micromètres ;
- ladite couche intermédiaire a une épaisseur de 50 à 150 micromètres ;
- ladite couche interne a une épaisseur de 50 à 150 micromètres.

18. Procédé de métallurgie des poudres pour la fabrication et éventuellement la mise en forme d'une gaine de combustible nucléaire selon l'une quelconque des revendications 1 à 17, ledit procédé comprenant un frittage, éventuellement suivi d'une étape d'usinage, sous atmosphère inerte ou sous vide dudit alliage de zirconium constitutif de ladite couche intermédiaire, ledit alliage se trouvant sous forme de poudre homogène.

19. Procédé de métallurgie des poudres selon la revendication 18, **caractérisé en ce que** les étapes suivantes réalisées sous atmosphère inerte ou sous vide précédent ladite étape de frittage :
a) un remplissage d'un moule avec une poudre homogène comprenant ledit zirconium, ledit erbium et lesdits éléments supplémentaires, suivi éventuellement d'une pré-compaction de ladite poudre ; puis,
b) une compaction à froid de ladite poudre afin d'obtenir une ébauche compacte moulée ; puis,
c) une extraction de ladite ébauche, suivie éventuellement d'une étape d'usinage.

20. Procédé de fusion pour la fabrication et éventuellement la mise en forme d'une gaine de combustible nucléaire selon l'une quelconque des revendications 1 à 17 comprenant les étapes suivantes :
- une fusion suivie d'une solidification dans un moule d'un mélange dudit zirconium, dudit erbium et desdits éléments supplémentaires : puis,
- éventuellement un usinage, tel un fraisage et/ou un sablage.

21. Procédé de fusion selon la revendication 20, **caractérisé en ce que** ledit procédé comprend en outre une ou plusieurs des étapes suivantes :
- une refusion suivie d'une solidification dans un moule ;
- un traitement thermique ;
- une mise en forme à chaud et/ou à froid, tel un laminage ;
- un usinage, tel un fraisage et/ou un sablage.

22. Procédé de fusion selon la revendication 21, **caractérisé en ce qu'**il comprend la succession des étapes suivantes réalisées éventuellement sous atmosphère inerte ou sous vide :
- une refusion suivie d'une solidification ;
- un premier traitement thermique ;
- un usinage ;
- une étape de mise en forme à chaud et/ou à froid ;
- un usinage;
- un deuxième traitement thermique ;
- un laminage à froid final ;
- un traitement thermique final.

23. Procédé de fusion selon la revendication 22, **caractérisé en ce qu'**au moins un desdits traitements thermiques consiste en un chauffage à une température comprise entre 600 °C et 1000 °C.

24. Procédé de fusion selon la revendication 23, **caractérisé en ce qu'**au moins un desdits traitements thermiques consiste en un chauffage à une température de 800 °C.

25. Procédé de fusion selon la revendication 23 ou 24, **caractérisé en ce que** ledit traitement thermique est le premier traitement thermique.

## Claims

1. A nuclear fuel cladding having a composite structure comprising the following three successive layers:
- an external layer consisting of metal or alloy;
- an intermediate layer;
- an internal layer consisting of metal or alloy;
wherein said cladding is **characterized in that** the intermediate layer consists of a zirconium alloy comprising erbium, selected from natural erbium, the ¹⁶⁷Er isotope and mixtures thereof, as a burnable neutron poison, said zirconium alloy comprising, by weight:
- from 4 to 8% of said erbium;
- from 0.005 to 5% additional elements such as additives and/or manufacturing impurities;
- and the remainder of zirconium.

2. The nuclear fuel cladding according to claim 1, **characterized in that** said constituent zirconium alloy of the intermediate layer comprises, by weight, from 5 to 7% erbium.

3. The nuclear fuel cladding according to claim 2, **characterized in that** said constituent zirconium alloy of the intermediate layer comprises, by weight, approximately 6% erbium.

4. The nuclear fuel cladding according to any one of the preceding claims, **characterized in that** said zirconium alloy comprises, by weight, 0.005 to 1% of said additional elements.

5. The nuclear fuel cladding according to any one of the preceding claims, **characterized in that** said additives comprise, by weight:
- less than 3% niobium;
- less than 2% tin;
- less than 0.6% nickel;
- less than 0.6% molybdenum;
- less than 0.6% copper;
- less than 0.6% iron;
- less than 0.2% chromium;
- less than 0.16% oxygen in a solid solution.

6. The nuclear fuel cladding according to any one of the preceding claims, **characterized in that** said manufacturing impurities comprise, by weight:
- less than 120 ppm silicon;
- less than 100 ppm sulfur;
- less than 20 ppm chlorine;
- less than 10 ppm phosphorus;
- less than 10 ppm boron;
- less than 10 ppm calcium;
- less than 50 ppm of each of the following elements:
lithium, fluorine, heavy metals.

7. The nuclear fuel cladding according to any one of the preceding claims, **characterized in that** erbium is distributed uniformly within the zirconium alloy and/or that there is no segregation of erbium in the form of erbium precipitates.

8. The nuclear fuel cladding according to any one of the preceding claims, **characterized in that** all or part of the erbium is present in the zirconium alloy in the form of complex oxide precipitates which, by weight, contain mainly erbium.

9. The nuclear fuel cladding according to claim 8, **characterized in that** said precipitates have an average size of one micrometer or less.

10. The nuclear fuel cladding according to claim 9, **characterized in that** said precipitates have an average size of 500 nanometers or less.

11. The nuclear fuel cladding according to claim 10, **characterized in that** said precipitates have an average size lying in the range between 5 nanometers and 200 nanometers.

12. The nuclear fuel cladding according to any one of claims 8 to 11, **characterized in that** said oxide precipitates are distributed uniformly within the zirconium alloy.

13. The nuclear fuel cladding according to any one of the preceding claims, **characterized in that** the constituent metal or alloy of said external layer is different from the constituent metal or alloy of said internal layer.

14. The nuclear fuel cladding according to claim 13, **characterized in that** said external layer consists of M5 alloy and said internal layer consists of a zirconium alloy able to resist to internal stress corrosion.

15. The nuclear fuel cladding according to any one of claims 1 to 12, **characterized in that** the constituent metal or alloy of said external layer is the same as the constituent metal or alloy of said internal layer.

16. The nuclear fuel cladding according to any one of the preceding claims, further **characterized in that** the constituent zirconium alloy of said intermediate layer has a composition similar to that of the alloy of said external layer or said internal layer, except it comprises erbium.

17. The nuclear fuel cladding according to any one of the preceding claims, **characterized in that**:
- said external layer has a thickness between 350 and 450 micrometers;
- said intermediate layer has a thickness between 50 and 150 micrometers;
- said internal layer has a thickness between 50 and 150 micrometers.

18. A powder metallurgy process for the manufacture and, if required, the shaping of a nuclear fuel cladding according to any one of claims 1 to 17, wherein said process comprises the sintering in an inert atmosphere or vacuum of said constituent zirconium alloy of said intermediate layer, followed, if required, by a machining step, wherein said alloy is in the form of a homogeneous powder.

19. The powder metallurgy process according to claim 18, **characterized in that** the following steps are performed in an inert atmosphere or vacuum prior to said sintering step:
a) filling a mold with a homogeneous powder comprising said zirconium, said erbium and said additional elements, followed, if required, by pre-compaction of said powder; and
b) cold-compacting said powder to obtain a molded compact blank; and
c) extracting said blank, followed, if required, by a machining step.

20. A melting process for the manufacture and, if required, the shaping of a nuclear fuel cladding according to any one of claims 1 to 17, comprising the steps of:
- melting and then solidifying a mixture of said zirconium, said erbium and said additional elements in a mold; and
- if required, machining, such as milling and/or sandblasting.

21. The melting process according to claim 20, **characterized in that** said process further comprises one or more of the following steps:
- remelting, followed by solidification, in a mold;
- a heat treatment;
- a hot and/or cold shaping step, for instance rolling;
- machining, such as milling and/or sandblasting.

22. The melting process according to claim 21, **characterized in that** it comprises the following successive steps performed, if required, in an inert atmosphere or vacuum:
- remelting, followed by solidification;
- a first heat treatment;
- machining;
- a hot and/or cold shaping step;
- machining;
- a second heat treatment;
- a final cold rolling;
- a final heat treatment.

23. The melting process according to claim 22, **characterized in that** at least one of said heat treatments consists of heating at a temperature in the range between 600°C and 1000°C.

24. The melting process according to claim 23, **characterized in that** at least one of said heat treatments consists of heating at a temperature of 800°C.

25. The melting process according to claim 23 or 24, **characterized in that** said heat treatment is the first heat treatment.

## Patentansprüche

1. Kernbrennstoffhülle mit einer Verbundstruktur mit drei aufeinanderfolgenden Schichten:
- einer Aussenschicht aus Metall oder einer Legierung;
- einer Zwischenschicht;
- einer Innenschicht aus Metall oder einer Legierung;
wobei die besagte Hülle **dadurch gekennzeichnet ist, dass** die Zwischenschicht aus einer erbiumhaltigen Zirkoniumlegierung besteht, wobei das Erbium als abbrennbares Gift (Neutronenabsorber) aus natürlichem Erbium, dem ¹⁶⁷Er-Isotop und deren Mischungen gewählt wird,
wobei die besagte Zirkoniumlegierung gewichtsprozentmässig enthält:
- von 4 bis 8% an besagtem Erbium;
- von 0.005 bis 5% an Zusatzelementen wie Zusatzstoffen und/oder Herstellungsverunreinigungen;
- und den Rest an Zirkonium.

2. Kernbrennstoffhülle gemäss Anspruch 1, **dadurch gekennzeichnet, dass** die besagte Zirkoniumlegierung, welche die Zwischenschicht bildet, 5 bis 7 Gewichtsprozent Erbium enthält.

3. Kernbrennstoffhülle gemäss Anspruch 2, **dadurch gekennzeichnet, dass** die besagte Zirkoniumlegierung, welche die Zwischenschicht bildet, ca. 6 Gewichtsprozent Erbium enthält.

4. Kernbrennstoffhülle gemäss irgendeinem der vorhergehenden Ansprüche, **dadurch gekennzeichnet, dass** die besagte Zirkoniumlegierung ca. 0.005 bis 1 Gewichtsprozent der besagten Zusatzelemente enthält.

5. Kernbrennstoffhülle gemäss irgendeinem der vorhergehenden Ansprüche, **dadurch gekennzeichnet, dass** die besagten Zusatzstoffe enthalten:
- weniger als 3 Gewichtsprozent an Niobium;
- weniger als 2 Gewichtsprozent an Zinn;
- weniger als 0.6 Gewichtsprozent an Nickel;
- weniger als 0.6 Gewichtsprozent an Molybdän;
- weniger als 0.6 Gewichtsprozent an Kupfer;
- weniger als 0.6 Gewichtsprozent an Eisen;
- weniger als 0.2 Gewichtsprozent an Chrom;
- weniger als 0.16 Gewichtsprozent an Sauerstoff in fester Lösung.

6. Kernbrennstoffhülle gemäss irgendeinem der vorhergehenden Ansprüche, **dadurch gekennzeichnet, dass** die besagten Herstellungsverunreinigungen gewichtsprozentmässig enthalten:
- weniger als 120 PPM (Teile pro Million) Silicium;
- weniger als 100 PPM (Teile pro Million) Schwefel;
- weniger als 20 PPM (Teile pro Million) Chlor;
- weniger als 10 PPM (Teile pro Million) Phosphor;
- weniger als 10 PPM (Teile pro Million) Bor;
- weniger als 10 PPM (Teile pro Million) Calcium;
- weniger als 50 PPM (Teile pro Million) von jedem der folgenden Elemente: Lithium, Fluor, Schwermetallen.

7. Kernbrennstoffhülle gemäss irgendeinem der vorhergehenden Ansprüche, **dadurch gekennzeichnet, dass** das Erbium homogen in der Zirkoniumlegierung verteilt ist und/oder, dass keine Fällung von Erbium in der Form von Erbiumniederschlägen existiert.

8. Kernbrennstoffhülle gemäss irgendeinem der vorhergehenden Ansprüche, **dadurch gekennzeichnet, dass** alles Erbium oder Teil des Erbiums sich in der Zirkoniumlegierung in der Form von komplexen Oxidniederschlägen, welche gewichtsprozentmässig vorwiegend Erbium enthalten, findet.

9. Kernbrennstoffhülle gemäss Anspruch 8, **dadurch gekennzeichnet, dass** die besagten Niederschläge eine Durchschnittgrösse gleich oder weniger als 1 Mikrometer aufweisen.

10. Kembrennstoflhülle gemäss Anspruch 9, **dadurch gekennzeichnet, dass** die besagten Niederschläge eine Durchschnittgrösse gleich oder weniger als 500 Nanometer aufweisen.

11. Kembrennstofihülle gemäss Anspruch 10, **dadurch gekennzeichnet, dass** die besagten Niederschläge eine Durchschnittgrösse zwischen 5nm und 200nm aufweisen.

12. Kernbrennstoffhülle gemäss irgendeinem der Ansprüche 8 bis 11, **dadurch gekennzeichnet, dass** die besagten Oxidniederschläge homogen in der Zirkoniumlegierung verteilt sind.

13. Kernbrennstoffhülle gemäss irgendeinem der vorhergehenden Ansprüche, **dadurch gekennzeichnet, dass** das Metall oder die Legierung, welches bzw. welche die besagte Aussenschicht bildet, nicht identisch ist mit dem Metall oder der Legierung, welches bzw. welche die besagte Innenschicht bildet.

14. Kernbrennstoffhülle gemäss Anspruch 13, **dadurch gekennzeichnet, dass** die besagte Aussenschicht aus der M5-Legierung besteht und die besagte Innenschicht aus einer Zirkoniumlegierung besteht, welche gegen die Innenkorrosion unter Druck beständig ist.

15. Kernbrennstoffhülle gemäss irgendeinem der Ansprüche 1 bis 12, **dadurch gekennzeichnet, dass** das Metall oder die Legierung, welches bzw. welche die besagte Aussenschicht bildet, identisch ist mit dem Metall oder der Legierung, welches bzw. welche die besagte Innenschicht bildet.

16. Kernbrennstoffhülle gemäss irgendeinem der vorhergehenden Ansprüche, **dadurch gekennzeichnet, dass** zudem die Zirkoniumlegierung, welche die besagte Zwischenschicht bildet, eine ähnliche Komposition aufweist wie die Legierung der besagten Aussenschicht oder der besagten Innenschicht, ausser dass sie Erbium enthält.

17. Kernbrennstoffhülle gemäss irgendeinem der vorhergehenden Ansprüche, **dadurch gekennzeichnet, dass**:
- die besagte Aussenschicht eine Dicke von 350 bis 450 Mikrometern hat;
- die besagte Zwischenschicht eine Dicke von 50 bis 150 Mikrometern hat;
- die besagte Innenschicht eine Dicke von 50 bis 150 Mikrometern hat.

18. Pulvermetallurgisches Verfahren zur Herstellung und eventuell zur Formung einer Kernbrennstoffhülle gemäss irgendeinem der Ansprüche 1 bis 17, wobei das besagte Verfahren eine Sinterung besagter die Zwischenschicht bildender Zirkoniumlegierung umfasst, eventuell von einem Bearbeitungsschritt gefolgt, unter inerter Atmosphäre oder unter Vakuum, wobei die besagte Legierung sich in der Form eines homogenen Pulvers befindet.

19. Pulvermetallurgisches Verfahren gemäss Anspruch 18, **dadurch gekennzeichnet, dass** die nachstehenden unter inerter Atmosphäre oder unter Vakuum stattfindenden Schritte vor dem besagten Sinterungsschritt erfolgen:
a) ein Füllen einer Giessform mit einem homogenen Pulver, welches das besagte Zirkonium, das besagte Erbium und die besagten Zusatzelemente enthält, eventuell von einer Vorverdichtung des besagten Pulvers gefolgt; dann
b) eine Kaltverdichtung des besagten Pulvers, um einen kompakten Gussrohling zu erhalten; dann
c) ein Herausnehmen des besagten Rohlings, eventuell von einem Bearbeitungsschritt gefolgt.

20. Schmelzverfahren zur Herstellung und eventuell zur Formung einer Kernbrennstoffhülle gemäss irgendeinem der Ansprüche 1 bis 17, mit den nachstehenden Schritten:
- eine Fusion, und danach eine Verfestigung in einer Giessform, einer Mischung des besagten Zirkoniums, des besagten Erbiums und der besagten Zusatzelemente; dann
- eventuell eine Bearbeitung, wie beispielsweise ein Fräsen und/oder Sandstrahlen.

21. Verfahren gemäss Anspruch 20, **dadurch gekennzeichnet, dass** das besagte Verfahren zudem einen oder mehrere der nachstehenden Schritte umfasst:
- ein Umschmelzen, von einer Verfestigung in einer Giessform gefolgt;
- eine Hitzebehandlung;
- eine Heiss- und/oder Kaltverformung, wie z.B. eine Laminierung;
- eine Bearbeitung, wie beispielsweise Fräsen und/oder Sandstrahlen.

22. Schmelzverfahren gemäss Anspruch 21, **dadurch gekennzeichnet, dass** es das Aufeinanderfolgen der nachstehenden, eventuell unter inerter Atmosphäre oder unter Vakuum stattfindenden Schritten umfasst:
- Umschmelzen, von einer Verfestigung gefolgt;
- eine erste Hitzebehandlung;
- eine Bearbeitung;
- eine Heiss- und/oder Kaltverformung;
- eine Bearbeitung;
- eine zweite Hitzebehandlung;
- eine abschliessende Kaltlaminierung;
- eine abschliessende Hitzebehandlung.

23. Schmelzverfahren gemäss Anspruch 22, **dadurch gekennzeichnet, dass** mindestens eine der besagten Hitzebehandlungen aus einer Aufheizung auf eine Temperatur zwischen 600°C und 1000°C besteht.

24. Schmelzverfahren gemäss Anspruch 23, **dadurch gekennzeichnet, dass** mindestens eine der besagten Hitzebehandlungen aus einer Aufheizung auf eine Temperatur von 800°C besteht.

25. Schmelzverfahren gemäss Anspruch 23 oder 24, **dadurch gekennzeichnet, dass** die besagte Hitzebehandlung die erste Hitzebehandlung ist.
